# EUROPEAN PATENT APPLICATION

(11) **EP 4 815 478 A1**
(43) Date of publication of application: **30.09.2026**
(21) Application number: 24935316.0
(22) Date of filing: 15.04.2024
(51) Int. Cl.: H04N 23/60, G03B 15/00

(54) **CONTROL METHOD FOR PHOTOGRAPHIC DEVICE, AND PHOTOGRAPHIC DEVICE**

(71) Applicant: Arashi Vision Inc., Shenzhen, Guangdong 518101 (CN)
(72) Inventor: PENG, Xuange, Shenzhen, Guangdong 518101 (CN); SANG, Biao, Shenzhen, Guangdong 518101 (CN)
(74) Representative: Michalski Hüttermann & Partner mbB
(86) International application number: PCT/CN2024/087769
(87) International publication number: WO 2025/217760

(57) **Abstract**

The present disclosure provides a control method for an imaging device. The imaging device has a video recording function. The method includes initiating video recording, in response to detecting that pose information of the imaging device meets a recording-start pose condition.

## Description

### Technical Field

The present disclosure relates, but is not limited, to a control method for an imaging device and an imaging device.

### Background

In recent years, with the iteration of imaging devices and the development of image processing technology, different types and functions of imaging devices have been widely applied in various fields to record beautiful moments in life anytime and anywhere.

In practical applications, when users use auxiliary devices, undesired video segments may be generated due to inconvenient operation. Taking a selfie stick as an example of an auxiliary device, when the imaging device is used with a selfie stick, undesired video segments may be generated after starting video recording, such as adjusting the camera position, selfie stick, etc., after mounting the camera to the selfie stick. The undesired video segments require post-editing to meet the intended recording purpose, resulting in poor user experience.

### Summary

The following is an overview of the subject matter described in detail in the present disclosure. This overview is not intended to limit the scope of protection of the claims.

The present disclosure provides a control method for an imaging device and an imaging device.

A first aspect of the present disclosure provides a control method for an imaging device, used for an imaging device, the imaging device having a video recording function. The control method for the imaging device includes:
initiating video recording in response to detecting that pose information of the imaging device meets a pose condition for starting recording.

According to some implementations of the present disclosure, before initiating video recording in response to detecting that the pose information of the imaging device meets the pose condition for starting recording, the method further includes:
controlling the imaging device to be in a target function-on state in response to a function enable operation by a user, the target function being used to initiate video recording in response to detecting that the pose information of the imaging device meets the pose condition for starting recording.

According to some implementations of the present disclosure, the control method for the imaging device further includes:
when the imaging device initiates video recording, controlling an indicating device to indicate that the imaging device has entered a video recording state.

According to some implementations of the present disclosure, the indicating device includes a speaker, the speaker being used to broadcast voice indication information when the imaging device initiates video recording, the voice indication information being used to indicate that the imaging device has entered the video recording state. The control method for the imaging device further includes:
performing audio processing on audio recorded during broadcasting the voice indication information to obtain target audio that eliminates the voice indication information; and
saving the target audio and a corresponding recorded video segment.

According to some implementations of the present disclosure, the pose information includes rotation information of the imaging device. Initiating video recording in response to detecting that the pose information of the imaging device meets the pose condition for starting recording includes:
initiating video recording in response to detecting that the rotation information meets a rotation condition for starting recording.

According to some implementations of the present disclosure, the rotation information includes rotation information of the imaging device around a first axis.

The first axis forms an angle with an optical axis of a lens of the imaging device; and/or the first axis passes through the imaging device.

According to some implementations of the present disclosure, the rotation condition for starting recording includes at least one of the following conditions:
the angular speed of the imaging device rotating around the first axis is greater than or equal to a first angular speed threshold;
the angular acceleration of the imaging device rotating around the first axis is greater than or equal to a first angular acceleration threshold;
the number of changes in a rotation direction of the imaging device around the first axis within a first preset time is greater than or equal to a number threshold; or
the rotation angle of the imaging device around the first axis within a second preset time is greater than or equal to a first angle threshold.

According to some implementations of the present disclosure, the rotation condition for starting recording includes:
the imaging device rotates clockwise by a first rotation angle and counterclockwise by a second rotation angle around the first axis within a third preset time; and
the absolute value of a difference between the second rotation angle and the first rotation angle is less than 20 degrees; and/or
the first rotation angle is greater than or equal to 20 degrees and less than or equal to 110 degrees; and/or
the second rotation angle is greater than or equal to 20 degrees and less than or equal to 110 degrees.

According to some implementations of the present disclosure, the rotation condition for starting recording includes:
the rotation information of the imaging device around the first axis meets a first sub-condition for starting rotation recording, and after a fourth preset time interval, the rotation information of the imaging device around the first axis meets a second sub-condition for starting rotation recording.

According to some implementations of the present disclosure, the rotation information further includes rotation information of the imaging device around a second axis, the first axis forming an angle with the second axis. The rotation condition for starting recording includes at least one of the following conditions:
the angular speed of the imaging device rotating around the second axis is less than or equal to a second angular speed threshold, the second angular speed threshold being less than the first angular speed threshold;
the angular acceleration of the imaging device rotating around the second axis is less than or equal to a second angular acceleration threshold, the second angular acceleration threshold being less than the first angular acceleration threshold; and
the rotation angle of the imaging device around the second axis within the second preset time is less than or equal to a second angle threshold, the second angle threshold being less than the first angle threshold.

According to some implementations of the present disclosure, the rotation information further includes rotation information of the imaging device around a third axis, the first axis, the second axis, and the third axis being perpendicular to each other in pairs. The rotation condition for starting recording further includes at least one of the following conditions:
the angular speed of the imaging device rotating around the third axis is less than or equal to a third angular speed threshold, the third angular speed threshold being less than the first angular speed threshold;
the angular acceleration of the imaging device rotating around the third axis is less than or equal to a third angular acceleration threshold, the third angular acceleration threshold being less than the first angular acceleration threshold; and
the rotation angle of the imaging device around the third axis within the second preset time is less than or equal to a third angle threshold, the third angle threshold being less than the first angle threshold.

According to some implementations of the present disclosure, the pose information includes a displacement parameter of the imaging device along a fourth axis, the fourth axis being perpendicular to an optical axis of a lens of the imaging device. The pose condition for starting recording includes: the displacement parameter is greater than a corresponding displacement parameter threshold.

According to some implementations of the present disclosure, the imaging device is connected to an extension member, and the pose information meeting the pose condition for starting recording includes:
a detection signal for characterizing a user performing a video recording start action on the imaging device via the extension member.

According to some implementations of the present disclosure, the control method for the imaging device further includes:
determining the pose information of the imaging device based on motion data collected by a motion sensor of the imaging device; or
determining the pose information of the imaging device based on an image captured by the imaging device.

According to some implementations of the present disclosure, initiating video recording in response to detecting that the pose information of the imaging device meets the pose condition for starting recording includes:
when the imaging device is in a standby or shutdown state, switching the imaging device to a power-on state and initiating video recording in response to detecting that the pose information of the imaging device meets the pose condition for starting recording.

A second aspect of the present disclosure provides a control method for an imaging device, used for an imaging device, the imaging device having a video recording function. The control method for the imaging device includes:
initiating video recording in response to detecting a recording trigger operation on the imaging device;
performing video processing on a to-be-processed video segment to obtain a target video, the to-be-processed video segment being a video segment in a recorded video recorded after the video recording is started and meeting a preset video processing condition; and
saving the target video.

According to some implementations of the present disclosure, the recording trigger operation includes:
an operation of making pose information of the imaging device meet the pose condition for starting recording as described in the first aspect.

According to some implementations of the present disclosure, the video processing includes at least one of the following processing methods:
deleting the to-be-processed video segment from the recorded video;
marking the to-be-processed video segment; or
replacing the to-be-processed video segment with a pre-stored video segment.

According to some implementations of the present disclosure, the preset video processing condition includes: the pose information of the imaging device meets a video processing pose condition.

According to some implementations of the present disclosure, the pose information includes rotation information of the imaging device around a fifth axis within a fifth preset time after the video recording is started, the fifth axis forming an angle with an optical axis of a lens of the imaging device. The video processing pose condition includes at least one of the following conditions:
the angular speed of the imaging device rotating around the fifth axis is greater than or equal to a fourth angular speed threshold;
the angular acceleration of the imaging device rotating around the fifth axis is greater than or equal to a fourth angular acceleration threshold;
the number of changes in a rotation direction of the imaging device around the fifth axis is greater than or equal to a second number threshold; or
the rotation angle of the imaging device around the fifth axis is greater than or equal to a fourth angle threshold.

The to-be-processed video segment includes: a video segment corresponding to the video processing pose condition met by the imaging device within the fifth preset time after the video recording is started.

According to some implementations of the present disclosure, the video processing pose condition includes: after the video recording is started, a movement speed of the imaging device is less than a speed threshold.

The to-be-processed video segment includes: a video segment corresponding to a period during which the movement speed is less than the speed threshold after the video recording is started.

According to some implementations of the present disclosure, the imaging device is connected to an extension member, and the video processing pose condition includes:
within a sixth preset time after the video recording is started, a pose change of the imaging device characterizes that a user is performing a first preset operation, the first preset operation including: changing a length of the extension member connected to the imaging device.

The to-be-processed video segment includes: a video segment corresponding to a period during which the user performs the first preset operation within a preset time after the video recording is started.

According to some implementations of the present disclosure, the video recording includes audio recording. After the video recording is started, the control method for the imaging device further includes:
performing a preset function corresponding to a second preset operation in response to recognizing the second preset operation by a user for the imaging device, and processing an audio segment and a video segment recorded during the user performing the second preset operation to obtain a target audio segment and a target video segment.

According to some implementations of the present disclosure, the preset function includes at least one of the following functions:
pausing video recording;
ending video recording;
starting voice control;
ending voice control;
marking a video; or
marking time.

According to some implementations of the present disclosure, the second preset operation includes rotating the imaging device and/or issuing a voice command.

According to some implementations of the present disclosure, if the second preset operation includes rotating the imaging device, different rotation methods and/or rotation actions correspond to different preset functions.

According to some implementations of the present disclosure, processing the audio segment and the video segment recorded during the period when the user performs the second preset operation to obtain the target audio segment and the target video segment includes:
determining a first start time and a first end time of the user performing the second preset operation; and
performing cutting processing on the audio segment and the video segment recorded from the first start time to the first end time to obtain the target audio segment and the target video segment.

According to some implementations of the present disclosure, performing cutting processing on the audio segment and the video segment recorded from the first start time to the first end time to obtain the target audio segment and the target video segment includes:
cutting the recorded audio and video respectively, and cutting audio and video from the first start time to the first end time to obtain a first cut audio and a first cut video;
performing timestamp alignment processing on the first cut audio and the first cut video; and
generating the target audio segment and the target video segment based on the timestamp-aligned first cut audio and first cut video.

According to some implementations of the present disclosure, the second preset operation includes issuing a voice command. Processing the audio segment and the video segment recorded during the period when the user performs the second preset operation includes: performing mute processing on the audio segment recorded during the period when the user performs the second preset operation.

According to some implementations of the present disclosure, performing mute processing on the audio segment recorded during the period when the user performs the second preset operation includes:
replacing the audio segment in the recorded audio during the second preset operation with a muted audio segment to obtain the target audio segment.

According to some implementations of the present disclosure, initiating video recording includes initiating video pre-recording.

Performing the preset function corresponding to the second preset operation in response to recognizing the second preset operation by the user for the imaging device includes: initiating formal video shooting or video imaging in response to recognizing a voice command issued by the user to start formal shooting or imaging.

A third aspect of the present disclosure provides an imaging device, the imaging device including:
a housing;
an imaging assembly disposed in the housing, the imaging assembly being used to capture an image; and
one or more processors connected to the imaging assembly, the processor being used to: initiate video recording in response to detecting that pose information of the imaging device meets a pose condition for starting recording.

According to some implementations of the present disclosure, the imaging device further includes: a touch display screen connected to the processor, the processor, before initiating video recording in response to detecting that the pose information of the imaging device meets the pose condition for starting recording, is further used to:
control the touch display screen to display a target function control; and
control the imaging device to be in a target function-on state in response to a function enable operation by a user on the target function control, the target function being used to initiate video recording in response to detecting that the pose information of the imaging device meets the pose condition for starting recording.

According to some implementations of the present disclosure, the imaging device further includes: an indicating device connected to the processor; and the processor is further used to:
when the imaging device initiates video recording, control the indicating device to indicate that the imaging device has entered a video recording state.

According to some implementations of the present disclosure, the indicating device includes a speaker, the speaker being used to broadcast voice indication information when the imaging device initiates video recording, the voice indication information being used to indicate that the imaging device has entered the video recording state; and the processor is further used to:
perform audio processing on audio recorded during broadcasting the voice indication information to obtain target audio that eliminates the voice indication information; and
save the target audio and a corresponding recorded video segment.

According to some implementations of the present disclosure, the pose information includes rotation information of the imaging device. Initiating video recording in response to detecting that the pose information of the imaging device meets the pose condition for starting recording includes:
initiating video recording in response to detecting that the rotation information meets a rotation condition for starting recording.

According to some implementations of the present disclosure, the rotation information includes rotation information of the imaging device around a first axis; the first axis forms an angle with an optical axis of a lens of the imaging device; and/or the first axis passes through the housing of the imaging device.

According to some implementations of the present disclosure, the rotation condition for starting recording includes at least one of the following conditions:
the angular speed of the imaging device rotating around the first axis is greater than or equal to a first angular speed threshold;
the angular acceleration of the imaging device rotating around the first axis is greater than or equal to a first angular acceleration threshold;
the number of changes in a rotation direction of the imaging device around the first axis within a first preset time is greater than or equal to a number threshold; or
the rotation angle of the imaging device around the first axis within a second preset time is greater than or equal to a first angle threshold.

According to some implementations of the present disclosure, the rotation condition for starting recording includes:
the imaging device rotates clockwise by a first rotation angle and counterclockwise by a second rotation angle around the first axis within a third preset time; and
the absolute value of a difference between the second rotation angle and the first rotation angle is less than 20 degrees; and/or
the first rotation angle is greater than or equal to 20 degrees and less than or equal to 110 degrees; and/or
the second rotation angle is greater than or equal to 20 degrees and less than or equal to 110 degrees.

According to some implementations of the present disclosure, the rotation condition for starting recording includes:
the rotation information of the imaging device around the first axis meets a first sub-condition for starting rotation recording, and after a fourth preset time interval, the rotation information of the imaging device around the first axis meets a second sub-condition for starting rotation recording.

According to some implementations of the present disclosure, the rotation information further includes: rotation information of the imaging device around a second axis, the first axis forming an angle with the second axis. The rotation condition for starting recording includes at least one of the following conditions:
the angular speed of the imaging device rotating around the second axis is less than or equal to a second angular speed threshold, the second angular speed threshold being less than the first angular speed threshold;
the angular acceleration of the imaging device rotating around the second axis is less than or equal to a second angular acceleration threshold, the second angular acceleration threshold being less than the first angular acceleration threshold; or
the rotation angle of the imaging device around the second axis within the second preset time is less than or equal to a second angle threshold, the second angle threshold being less than the first angle threshold.

According to some implementations of the present disclosure, the rotation information further includes rotation information of the imaging device around a third axis, the first axis, the second axis, and the third axis being perpendicular to each other in pairs. The rotation condition for starting recording further includes at least one of the following conditions:
the angular speed of the imaging device rotating around the third axis is less than or equal to a third angular speed threshold, the third angular speed threshold being less than the first angular speed threshold;
the angular acceleration of the imaging device rotating around the third axis is less than or equal to a third angular acceleration threshold, the third angular acceleration threshold being less than the first angular acceleration threshold; or
the rotation angle of the imaging device around the third axis within the second preset time is less than or equal to a third angle threshold, the third angle threshold being less than the first angle threshold.

According to some implementations of the present disclosure, the pose information includes a displacement parameter of the imaging device along a fourth axis, the fourth axis being perpendicular to an optical axis of a lens of the imaging device. The pose condition for starting recording includes: the displacement parameter is greater than a corresponding displacement parameter threshold.

According to some implementations of the present disclosure, the imaging device includes a mounting portion, the mounting portion being used to connect to an extension member, and the pose information meeting the pose condition for starting recording includes:
a detection signal for characterizing a user performing a video recording start action on the imaging device via the extension member.

According to some implementations of the present disclosure, the imaging device further includes:
a motion sensor disposed within the housing, the motion sensor being used to collect motion data of the imaging device; and the processor is further used to:
determine the pose information of the imaging device based on motion data collected by the motion sensor of the imaging device.

According to some implementations of the present disclosure, the processor is further used to: determine the pose information of the imaging device based on an image captured by the imaging assembly.

According to some implementations of the present disclosure, the processor is used to:
when the imaging device is in a standby or shutdown state, switch the imaging device to a power-on state and initiate video recording in response to detecting that the pose information of the imaging device meets the pose condition for starting recording.

A fourth aspect of the present disclosure provides an imaging device, the imaging device having a video recording function, the imaging device including:
a housing;
an imaging assembly disposed in the housing, the imaging assembly being used to capture an image; and
one or more processors disposed within the housing and connected to the imaging assembly, the processor being used to:
   initiate video recording in response to detecting a recording trigger operation on the imaging device;
   perform video processing on a to-be-processed video segment to obtain a target video, the to-be-processed video segment being a video segment in a recorded video recorded after the video recording is started and meeting a preset video processing condition; and
   save the target video.

According to some implementations of the present disclosure, the imaging device is the imaging device as described in the third aspect.

According to some implementations of the present disclosure, the processor is used to:
perform video processing, where the video processing includes at least one of the following processing methods:
deleting the to-be-processed video segment from the recorded video;
marking the to-be-processed video segment; or
replacing the to-be-processed video segment with a pre-stored video segment.

According to some implementations of the present disclosure, the preset video processing condition includes: the pose information of the imaging device meets a video processing pose condition.

According to some implementations of the present disclosure, the pose information includes rotation information of the imaging device around a fifth axis within a fifth preset time after the video recording is started, the fifth axis forming an angle with an optical axis of a lens of the imaging device. The video processing pose condition includes at least one of the following conditions:
the angular speed of the imaging device rotating around the fifth axis is greater than or equal to a fourth angular speed threshold;
the angular acceleration of the imaging device rotating around the fifth axis is greater than or equal to a fourth angular acceleration threshold;
the number of changes in a rotation direction of the imaging device around the fifth axis is greater than or equal to a second number threshold; or
the rotation angle of the imaging device around the fifth axis is greater than or equal to a fourth angle threshold.

The to-be-processed video segment includes: a video segment corresponding to the video processing pose condition met by the imaging device within the fifth preset time after the video recording is started.

According to some implementations of the present disclosure, the video processing pose condition includes: after the video recording is started, a movement speed of the imaging device is less than a speed threshold.

The to-be-processed video segment includes: a video segment corresponding to a period during which the movement speed is less than the speed threshold after the video recording is started.

According to some implementations of the present disclosure, the imaging device is provided with a mounting portion, the mounting portion being used to connect to an extension member.

The video processing pose condition includes: within a sixth preset time after the video recording is started, a pose change of the imaging device characterizes that a user is performing a first preset operation, the first preset operation including: changing a length of the extension member connected to the imaging device.

The to-be-processed video segment includes: a video segment corresponding to a period during which the user performs the first preset operation within a preset time after the video recording is started.

According to some implementations of the present disclosure, the video recording includes audio recording. After the video recording is started, the processor is further used to:
perform a preset function corresponding to a second preset operation in response to recognizing the second preset operation by a user for the imaging device, and process an audio segment and a video segment recorded during the user performing the second preset operation to obtain a target audio segment and a target video segment.

According to some implementations of the present disclosure, the preset function includes at least one of the following functions:
pausing video recording;
ending video recording;
starting voice control;
ending voice control;
marking a video; or
marking time.

According to some implementations of the present disclosure, the second preset operation includes rotating the imaging device and/or issuing a voice command.

According to some implementations of the present disclosure, if the second preset operation includes rotating the imaging device, different rotation methods and/or rotation actions correspond to different preset functions.

According to some implementations of the present disclosure, processing the audio segment and the video segment recorded during the period when the user performs the second preset operation to obtain the target audio segment and the target video segment includes:
determining a first start time and a first end time of the user performing the second preset operation; and
performing cutting processing on the audio segment and the video segment recorded from the first start time to the first end time to obtain the target audio segment and the target video segment.

According to some implementations of the present disclosure, performing cutting processing on the audio segment and the video segment recorded from the first start time to the first end time to obtain the target audio segment and the target video segment includes:
cutting the recorded audio and video respectively, and cutting audio and video from the first start time to the first end time to obtain a first cut audio and a first cut video;
performing timestamp alignment processing on the first cut audio and the first cut video; and
generating the target audio segment and the target video segment based on the timestamp-aligned first cut audio and first cut video.

According to some implementations of the present disclosure, the second preset operation includes issuing a voice command. Processing the audio segment and the video segment recorded during the period when the user performs the second preset operation includes: performing mute processing on the audio segment recorded during the period when the user performs the second preset operation.

According to some implementations of the present disclosure, performing mute processing on the audio segment recorded during the period when the user performs the second preset operation includes:
replacing the audio segment in the recorded audio during the second preset operation with a muted audio segment to obtain the target audio segment.

According to some implementations of the present disclosure, initiating video recording includes initiating video pre-recording.

Performing the preset function corresponding to the second preset operation in response to recognizing the second preset operation by the user for the imaging device includes: initiating formal video shooting or video imaging in response to recognizing a voice command issued by the user to start formal shooting or imaging.

The control method for an imaging device and the imaging device provided in the implementations of the present disclosure, by controlling the imaging device to initiate video recording when pose information meets a pose condition for starting recording, enable the user to trigger the video recording function of the imaging device by controlling the pose of the imaging device after completing adjustments such as camera position and selfie stick. The trigger method is simple and quick, avoids the generation of undesired video segments, ensures that the video recorded in different scenarios can meet the actual needs of the user, and improves user experience.

After reading and understanding the drawings and detailed description, other aspects can be understood.

### Brief Description of Drawings

The drawings incorporated in and constituting a part of the specification illustrate implementations of the present disclosure and, together with the description, are used to explain the principles of the implementations of the present disclosure. In these drawings, similar reference numerals are used to indicate similar elements. The drawings described below are some implementations of the present disclosure, not all implementations. For those skilled in the art, other drawings can be obtained based on these drawings without creative effort.
FIG. 1 is a schematic diagram of a shooting or imaging assembly shown according to an exemplary implementation of the present disclosure.
FIG. 2 is a flowchart of a control method for an imaging device shown according to an exemplary implementation of the present disclosure.
FIG. 3 is a flowchart of a control method for an imaging device shown according to another exemplary implementation of the present disclosure.
FIG. 4 is a schematic diagram of an optical axis, a first axis, a second axis, a third axis, and an imaging device shown according to an exemplary implementation of the present disclosure.
FIG. 5 is a flowchart of a control method for an imaging device shown according to another exemplary implementation of the present disclosure.
FIG. 6 is a flowchart of processing an audio segment and a video segment recorded during the period when a user performs a second preset operation to obtain a target audio segment and a target video segment shown according to an exemplary implementation of the present disclosure.
FIG. 7 is a flowchart of performing cutting processing on an audio segment and a video segment recorded from a first start time to a first end time to obtain a target audio segment and a target video segment shown according to an exemplary implementation of the present disclosure.
FIG. 8 is a flowchart of a control method for an imaging device shown according to another exemplary implementation of the present disclosure.
FIG. 9 is a block diagram of an imaging device shown according to another exemplary implementation of the present disclosure.

Reference Numerals:
10, imaging device; 20, extension member; 30, housing; 40, imaging assembly; 50, processor; and 60, lens.

### Detailed Description

The following will clearly and completely describe the technical solutions in the implementations of the present disclosure in conjunction with the accompanying drawings in the implementations of the present disclosure. Obviously, the described implementations are part of the implementations of the present disclosure, rather than all implementations. Based on the implementations in the present disclosure, all other implementations obtained by those skilled in the art without creative efforts shall fall within the scope of protection of the present disclosure. It should be noted that, in the absence of conflict, the implementations in the present disclosure and the features in the implementations may be arbitrarily combined with each other.

In recent years, with the rapid iteration of imaging devices and the continuous development of image processing technology, for example, various types and functions of imaging devices such as cameras and mobile phones have been widely applied in various fields to record beautiful moments in life anytime and anywhere. In related technologies, when recording video using an imaging device, it is necessary to start video recording in the standby state of the imaging device by pressing a hardware button or clicking a control icon in the interactive interface, so as to control the imaging device.

However, when controlling an imaging device to perform video recording using the control method of related technologies, due to the limitation of the video recording start method, imaging devices such as panoramic cameras and action cameras need to be used with a selfie stick. The user needs to first start video recording by pressing a button or control, then extend the selfie stick and adjust the camera position. Therefore, the recorded video includes the process of adjusting the camera position and the selfie stick. In addition, in scenarios such as participating in skiing, since it is inconvenient to adjust the selfie stick during skiing, the user needs to start video recording before starting, and the recorded video also includes the initial acceleration phase of skiing, which is an undesired, meaningless segment that needs to be cut out by post-editing, resulting in poor final video effect and degrading the user experience. Furthermore, during skiing or other activities, most portions of the video segments lack viewing value. Taking skiing as an example, the initial stage of sliding involves relatively low speed and may not be worth recording, and the user is also required to start or pause video recording at any time during sliding.

The present disclosure provides, as exemplary implementations, a method for controlling an imaging device and an imaging device. By controlling the imaging device to initiate video recording when pose information meets a pose condition for starting recording, the user can trigger the video recording function of the imaging device by controlling the pose of the imaging device after completing adjustments such as camera position and selfie stick. The triggering method is simple and efficient, which avoids the generation of undesired video segments, and ensures that the video recorded in different scenarios can meet the actual needs of the user, thereby improving user experience.

The control method for an imaging device provided in the implementations of the present application can be used in application scenarios including, for example, imaging devices such as cameras and mobile phones, and can initiate video recording when pose information meets a pose condition for starting recording, so that the user can control the video recording function of the imaging device by controlling the pose of the imaging device.

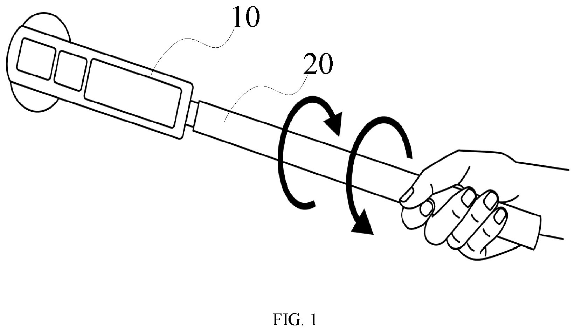

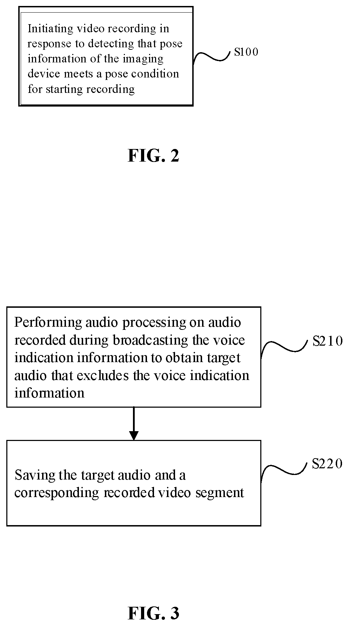

In an exemplary implementation, a method for controlling an imaging device is provided. The imaging device may include, for example, a camera, a mobile phone, or other devices having a lens assembly and an imaging module for capturing. As shown in FIG. 1, the imaging device 10 may be used with an extension member 20. As shown in FIG. 2, the control method for the imaging device 10 includes the following operations.

Operation S100: initiating video recording in response to detecting that pose information of the imaging device meets a pose condition for starting recording.

In operation S100, the pose information of the imaging device 10 can characterize the pose change amount of the imaging device 10 within a period of time or the pose change trend of the imaging device 10 at the current moment. When the user holds the imaging device 10 by hand or via an extension member 20 such as a selfie stick connected to the imaging device 10, and moves the imaging device 10 to perform movements such as translation or rotation, the pose information of the imaging device 10 changes synchronously. In some implementations, the pose information can be obtained by acquiring motion data of the imaging device 10 along the pitch, roll, and yaw axes via a pose sensor of the imaging device 10, such as an inertial measurement unit (IMU), and determining the pose information based on the motion data. The pose information of the imaging device 10 can also be obtained based on images captured by the imaging device 10 using image recognition technology.

Whether the pose information meets the pose condition for starting recording is determined based on the pose information. When it is determined that the pose information meets the pose condition for starting recording, the imaging device 10 is controlled to initiate video recording, that is, the video recording function of the imaging device 10 is triggered. The pose condition for starting recording, as the criterion for determining whether to initiate video recording, represents the standard that the pose change or pose change trend characterized by the pose information needs to reach when starting video recording, for example, a rotation change amount or change pattern in a specific direction.

The user can control the movement of the imaging device 10 so that the pose information of the imaging device 10 meets the pose condition for starting recording, thereby achieving a video recording start method different from pressing a button or clicking a control. In some implementations, when the imaging device 10 needs to be used with a selfie stick, the user can first connect the imaging device 10 to the selfie stick, and then adjust the length of the selfie stick and the camera position of the imaging device 10. Thereafter, the user can rotate the selfie stick along its extension direction to drive the imaging device 10 to rotate. As a result, the pose information of the imaging device 10 changes accordingly. When the pose condition for starting recording is met, video recording is started. This allows the recorded video to exclude the process of adjusting the selfie stick and camera position, thereby avoiding the generation of undesired video segments.

In addition, in one implementation, the imaging device is an action camera. In sports scenarios, the user can connect the imaging device via a selfie stick, and trigger the camera to start and stop video recording at any time by "twisting" the camera. Compared to keeping the camera in a continuous recording state, this implementation can effectively reduce the power consumption of the imaging device, and does not require remote control via a wireless communication component (Bluetooth or Wi-Fi), resulting in greater stability.

In this implementation, by controlling the imaging device 10 to initiate video recording when the pose information meets a pose condition for starting recording, the user can trigger the video recording function of the imaging device 10 by controlling the pose of the imaging device 10 after completing adjustments such as camera position and selfie stick. The trigger method is simple and efficient, which avoids the generation of undesired video segments, and ensures that the video recorded in different scenarios can meet the actual needs of the user, thereby improving the user experience.

In some implementations, before initiating the video recording in response to detecting that the pose information of the imaging device 10 meets the pose condition for starting recording, the following operation is further included: controlling the imaging device 10 to enter a target function on-state in response to a function enable operation by a user, where the target function is configured to initiate the video recording in response to detecting that the pose information of the imaging device 10 meets the pose condition for starting recording.

Before determining whether the pose information of the imaging device 10 meets the pose condition for starting recording, when the imaging device 10 recognizes a function enable operation by the user, the imaging device 10 is controlled to enter a target function on-state, so that the imaging device 10 can control the imaging device 10 to initiate video recording when detecting that the pose information meets the pose condition for starting recording via the enabled target function. In some implementations, the function enable operation may include clicking a control corresponding to the target function in the interactive interface.

In this implementation, when a function enable operation by the user is detected, the imaging device 10 is controlled to enter a target function on-state. The enabled target function allows the imaging device 10 to initiate video recording upon detecting that the pose information meets the pose condition for starting recording. That is, the initiation and termination of video recording can be started by changing the pose, preventing erroneous triggering when video recording is not desired and, accordingly, improving user experience.

In some implementations, the control method for the imaging device 10 further includes the following operation: when the imaging device 10 initiates video recording, controlling an indicating device to indicate that the imaging device 10 has entered a video recording state.

In this implementation, when the imaging device 10 initiates video recording, the indicating device is configured to indicate that the imaging device 10 has entered a video recording state. This can prompt the user that the device has entered the video recording state, allowing the user to adjust to a suitable shooting angle or imaging angle after receiving the indication for normal video recording. This also prevents the user from continuing to adjust the pose of the imaging device 10 after it has already entered the video recording state, which would otherwise result in undesired video segments, thereby improving user experience. In some implementations, the indicating device may include a motor capable of emitting vibration indication information, an indicator light capable of emitting light indication information, a speaker capable of emitting sound indication information, etc.

In some implementations, the indicating device includes a speaker configured to broadcast voice indication information when the imaging device 10 initiates video recording, where the voice indication information is used to indicate that the imaging device 10 has entered the video recording state. In some implementations, when the imaging device 10 initiates recording, the speaker can broadcast voice indication information such as "video recording started" to prompt the user that the imaging device 10 has entered the video recording state.

As shown in FIG. 3, the control method for the imaging device 10 further includes the following operations.

Operation S210: performing audio processing on audio recorded during broadcasting the voice indication information to obtain target audio that excludes the voice indication information.

In operation S210, the imaging device 10 continuously records audio, therefore, the broadcast voice indication information will be recorded by the microphone of the imaging device. In this implementation, audio processing can be performed on the audio recorded during broadcasting the voice indication information to identify and remove the broadcast voice indication information. This enables elimination of the voice indication information while retaining other audio information, such as the images and sounds required by the user, thereby generating target audio that excludes the broadcast voice indication information and only retains the images and sounds satisfying the user's recording requirements. In other implementations, all audio recorded during broadcasting the voice indication information can be directly removed, so that the corresponding portion of the target audio becomes muted. Accordingly, the target audio including the muted segment corresponding to the broadcast period is obtained.

Operation S220: saving the target audio and a corresponding recorded video segment.

In operation S220, the obtained target audio and the corresponding recorded video segment are saved, so that the generated audio and video do not include the broadcast voice indication information while only retaining the images and sounds required by the user.

In this implementation, by performing audio processing on the audio recorded during broadcasting the voice indication information, the target audio in which the voice indication information has been removed is obtained. Then the target audio and the corresponding recorded video segment are saved. This approach removes the voice indication information from the target audio, and only retains the images and sounds that meet the user's recording intent, thereby preventing the generation of undesired video segments caused by broadcasting the voice indication information, and improving the user experience.

In some implementations, the pose information includes rotation information of the imaging device 10. Initiating video recording in response to detecting that the pose information of the imaging device 10 meets the pose condition for starting recording includes the following operation: initiating video recording in response to detecting that the rotation information meets a rotation condition for starting recording.

The pose information includes rotation information of the imaging device 10, which may include, for example, the rotation amount or rotation pattern of the imaging device 10 around a preset axis. When it is detected that the rotation information of the imaging device 10 meets a rotation condition for starting recording, the pose information of the imaging device 10 meets the pose condition for starting recording, and the imaging device 10 can be controlled to initiate video recording.

In this implementation, the rotation information of the imaging device 10 is used as the pose information. When it is detected that the rotation information meets a rotation condition for starting recording, video recording is started, so that the user can trigger the video recording function of the imaging device 10 by rotating the imaging device 10 after completing adjustments such as camera position and selfie stick. The triggering method is simple and efficient, which avoids the generation of undesired video segments, and ensures that the video recorded in different scenarios can meet the actual needs of the user, thereby improving the user experience.

In some implementations, the rotation information includes rotation information of the imaging device 10 around a first axis, and the first axis forms an angle with an optical axis of a lens included in the imaging device 10.

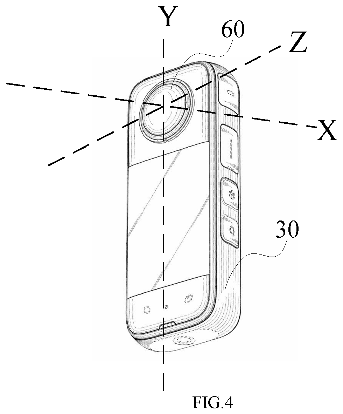

The first axis is set at an angle with the optical axis of the lens of the imaging device 10. As shown in FIG. 4, the optical axis of the lens of the imaging device 10 is X, and the angle between the first axis Y and the optical axis X may be, for example, 90°.

The rotation information may include rotation information of the imaging device 10 around the first axis, that is, the parameter value of one or more rotation parameters around the first axis. The rotation parameters around the first axis can characterize the rotation change amount of the imaging device 10 around the first axis within a period of time or the rotation change trend at the current moment. The rotation parameters may include, for example, an angular speed, an angular acceleration, the number of changes in rotation direction within a period of time, or a rotation angle, etc.

In this implementation, by using the rotation information of the imaging device 10 around the first axis as the rotation information for determining whether the rotation condition for starting recording is met, the rotation action of the imaging device 10 around the first axis can serve as a triggering method for the video recording function of the imaging device 10. A restriction on the preset pose condition for starting recording is realized, avoiding erroneous triggering caused by other pose changes of the imaging device 10 when the user does not intend to initiate video recording.

In some implementations, the first axis passes through the imaging device 10.

As shown in FIG. 1 and FIG. 4, the first axis Y passes through the imaging device 10. When the imaging device 10 is used with a selfie stick, the direction of the first axis Y may be the same as the extension direction of the selfie stick. When the user rotates the selfie stick, the imaging device 10 can be driven to rotate along the first axis, causing the imaging device 10 to undergo a "twisting" pose change.

In this implementation, the first axis passes through the imaging device 10. In scenarios where the imaging device 10 is used with a selfie stick, the first axis can be the same as the extension direction of the selfie stick. The user can rotate the selfie stick to cause the imaging device 10 to undergo a "twisting" pose change to initiate video recording. The triggering method is simple and efficient, which avoids the generation of undesired video segments, and ensures that the video recorded in different scenarios can meet the actual needs of the user, thereby improving the user experience.

In some implementations, the rotation condition for starting recording includes at least one of the following conditions: an angular speed of the imaging device 10 rotating around the first axis is greater than or equal to a first angular speed threshold; an angular acceleration of the imaging device 10 rotating around the first axis is greater than or equal to a first angular acceleration threshold; the number of changes in a rotation direction of the imaging device 10 around the first axis within a first preset time is greater than or equal to a number threshold; or a rotation angle of the imaging device 10 around the first axis within a second preset time is greater than or equal to a first angle threshold.

One or more of the angular speed of the imaging device 10 rotating around the first axis, the angular acceleration of the imaging device 10 rotating around the first axis, the number of changes in rotation direction of the imaging device 10 around the first axis within a first preset time, and the rotation angle of the imaging device 10 around the first axis within a second preset time, can be used as the basis for determining whether the preset rotation condition for starting recording is met. When the single rotation condition for starting recording is selected, the video recording can be started only when the selected single rotation condition for starting recording is met. When multiple rotation conditions for starting recording are selected, all the selected rotation conditions for starting recording need to be met to initiate video recording.

The angular speed and angular acceleration of the imaging device 10 rotating around the first axis can characterize the rotation change trend, that is, the pose change trend of the imaging device 10 around the first axis at the current moment. The angular speed of the imaging device 10 rotating around the first axis is greater than or equal to the first angular speed threshold, and the angular acceleration of the imaging device 10 rotating around the first axis is greater than or equal to the first angular acceleration threshold, can serve as rotation conditions for starting recording. The number of changes in rotation direction of the imaging device 10 around the first axis within a first preset time, and the rotation angle of the imaging device 10 around the first axis within a second preset time, can both characterize the rotation change amount, that is, the pose change amount of the imaging device 10 around the first axis within a period of time.

The condition in which the number of changes in rotation direction of the imaging device 10 around the first axis within a first preset time is greater than or equal to the number threshold, and the rotation angle of the imaging device 10 around the first axis within a second preset time is greater than or equal to the first angle threshold, can serve as rotation conditions for starting recording. In some implementations, the first angular speed threshold may be 111°/s, the first preset time and the second preset time may both be 900 ms, and the number threshold may be 1. The above thresholds can be set according to actual needs. For example, to enhance resistance to false triggering, the angular speed threshold and the number threshold can be set to have larger values.

In this implementation, one or more of the angular speed of the imaging device 10 rotating around the first axis, the angular acceleration of the imaging device 10 rotating around the first axis, the number of changes in rotation direction of the imaging device 10 around the first axis within a first preset time, and the rotation angle of the imaging device 10 around the first axis within a second preset time are used as the basis for determining whether the rotation condition for starting recording is met, providing a basis for determining whether the pose information meets the preset pose condition for starting recording. The rotation condition for starting recording can represent the rotation change amount or rotation change trend of the imaging device 10 along the first axis, that is, can characterize the pose change and pose change trend of the imaging device 10. The rotation condition for starting recording can initiate the video recording function of the imaging device 10 when the rotation condition for starting recording is met. The triggering method is simple and efficient, and helps avoiding the generation of undesired video segments.

In some implementations, the rotation condition for starting recording includes: the imaging device 10 rotates clockwise by a first rotation angle and counterclockwise by a second rotation angle around the first axis within a third preset time, while an absolute value of a difference between the second rotation angle and the first rotation angle is less than 20 degrees; and/or the first rotation angle is greater than or equal to 20 degrees and less than or equal to 110 degrees; and/or the second rotation angle is greater than or equal to 20 degrees and less than or equal to 110 degrees.

In some implementations, when the imaging device rotates clockwise by 40 degrees and counterclockwise by 45 degrees around the first axis within a third preset time of 900 ms, it can be considered that the rotation information meets the rotation condition for starting recording, and the imaging device 10 is controlled to initiate video recording.

In this implementation, whether the rotation condition for starting recording is satisfied is determined based on whether the image capturing device 10, within a third preset time period, rotates around the first axis by a first rotation angle in the clockwise direction and a second rotation angle in the counterclockwise direction. In a use case where the imaging device 10 is operated with a selfie stick, the user can rotate the selfie stick to cause the imaging device 10 to rotate by a certain angle in two different directions within a certain period of time. This generates a "twisting" pose change to initiate video recording. The triggering method is simple and efficient, which avoids the generation of undesired video segments and erroneous triggering of the video recording function, thereby improving the user experience.

In some implementations, the rotation condition for starting recording includes: the rotation information of the imaging device 10 around the first axis meets a first sub-rotation condition for starting recording, and after a fourth preset time interval, the rotation information of the imaging device 10 around the first axis meets a second sub-rotation condition for starting recording.

The condition for starting recording can include rotation information of the imaging device 10 around the first axis meeting a first sub-rotation condition for starting recording, and after a fourth preset time interval, the rotation information of the imaging device 10 around the first axis meeting a second sub-rotation condition for starting recording. Thus, the user needs to rotate the imaging device 10 twice at a certain time interval, with the two rotations respectively satisfying the first sub-rotation condition for starting recording and the second sub-rotation condition for starting recording, to initiate video recording. This approach can effectively prevent unintended triggering caused by a single rotation.

In some implementations, at least one of the following conditions can be used as the first sub-rotation condition for starting recording and the second sub-rotation condition for starting recording: the angular speed of the imaging device 10 rotating around the first axis is greater than or equal to the first angular speed threshold; the angular acceleration of the imaging device 10 rotating around the first axis is greater than or equal to the first angular acceleration threshold; the number of changes in rotation direction of the imaging device 10 around the first axis within a first preset time is greater than or equal to the number threshold; or the rotation angle of the imaging device 10 around the first axis within a second preset time is greater than or equal to the first angle threshold. After the user rotates the selfie stick to make the imaging device 10 meet the first sub-rotation condition for starting recording , a pause is required, and then the user rotates the selfie stick again to make the imaging device 10 meet the second sub-rotation condition for starting recording to initiate video recording.

In this implementation, the condition for starting recording includes the rotation information of the imaging device 10 around the first axis meet a first sub-condition for starting rotation recording, and after a fourth preset time interval, the rotation information of the imaging device 10 around the first axis meet a second sub-condition for starting rotation recording. Therefore, the user needs to rotate the imaging device 10 twice at a certain time interval, and both rotations need to meet the first sub-rotation condition for starting recording and the second sub-rotation condition for starting recording, respectively, to initiate video recording. This approach can avoid unintended triggering caused by a single rotation, thereby improving the user experience.

In some implementations, the rotation information further includes rotation information of the imaging device around a second axis, and the first axis forms an angle with the second axis. The rotation condition for starting recording includes at least one of the following conditions:
the angular speed of the imaging device rotating around the second axis is less than or equal to a second angular speed threshold, and the second angular speed threshold is less than the first angular speed threshold;
the angular acceleration of the imaging device rotating around the second axis is less than or equal to a second angular acceleration threshold, and the second angular acceleration threshold is less than the first angular acceleration threshold; or
the rotation angle of the imaging device around the second axis within the second preset time is less than or equal to a second angle threshold, and the second angle threshold is less than the first angle threshold.

The first axis forms an angle with the second axis. As shown in FIG. 4, when the angle between the first axis Y and the optical axis X is 90°, the second axis can be the direction of the optical axis X. One or more parameters selected from the angular speed of the imaging device 10 rotating around the second axis, the angular acceleration of the imaging device 10 rotating around the second axis, and the rotation angle of the imaging device 10 around the second axis within the second preset time can be used as the basis for determining whether the preset rotation condition for starting recording is met.

The angular speed and angular acceleration of the imaging device 10 rotating around the second axis can characterize the rotation change trend, that is, the pose change trend of the imaging device 10 around the second axis at the current moment. The rotation conditions for starting recording can include: the angular speed of the imaging device 10 rotating around the second axis being greater than or equal to the second angular speed threshold, and the angular acceleration of the imaging device 10 rotating around the second axis being greater than or equal to the second angular acceleration threshold, where the second angular speed threshold is less than the first angular speed threshold, and the second angular acceleration threshold is less than the first angular acceleration threshold.

The rotation angle of the imaging device 10 around the second axis within the second preset time can characterize the rotation change amount, that is, the pose change amount of the imaging device 10 around the second axis within a period of time. The rotation condition for starting recording can include the rotation angle of the imaging device 10 around the second axis within the second preset time being greater than or equal to the second angle threshold, where the second angle threshold is less than the first angle threshold. In some implementations, the second angular speed threshold may be 90°/s, and the second preset time may be 900 ms.

When the preset rotation condition for starting recording includes the first rotation angle of the imaging device 10 rotating clockwise around the first axis within the second preset time being 40°, and the absolute value of the difference between the second rotation angle and the first rotation angle being less than 20°, the preset rotation condition for starting recording can further include the rotation angle of the imaging device 10 around the second axis being less than 30°.

In this implementation, one or more parameters selected from the angular speed of the imaging device 10 rotating around the second axis, the angular acceleration of the imaging device 10 rotating around the second axis, and the rotation angle of the imaging device 10 around the second axis within the second preset time can be used as the basis for determining whether the rotation condition for starting recording is met, thereby providing a basis for determining whether the pose information meets the preset pose condition for starting recording. The second angular speed threshold is less than the first angular speed threshold, the second angular acceleration threshold is less than the first angular acceleration threshold, and the second angle threshold is less than the first angle threshold. These conditions further restrict the rotation change around the second axis, when the rotation condition for starting recording is met, to be less than the rotation change around the first axis. Such a configuration avoids erroneous recognition of excessive rotation change around the second axis as a "twisting pose change," prevents erroneous triggering of the video recording function, and ensures the accuracy of triggering the video recording function. Accordingly, the user experience can be improved.

In some implementations, the rotation information further includes rotation information of the imaging device around a third axis, and the first axis, the second axis, and the third axis are perpendicular to each other in pairs. The rotation condition for starting recording further includes at least one of the following conditions:
the angular speed of the imaging device rotating around the third axis is less than or equal to a third angular speed threshold, and the third angular speed threshold is less than the first angular speed threshold;
the angular acceleration of the imaging device rotating around the third axis is less than or equal to a third angular acceleration threshold, and the third angular acceleration threshold is less than the first angular acceleration threshold; or
the rotation angle of the imaging device around the third axis within the second preset time is less than or equal to a third angle threshold, and the third angle threshold is less than the first angle threshold.

The first axis, the second axis, and the third axis are perpendicular to each other in pairs. As shown in FIG. 4, when the angle between the first axis Y and the optical axis X is 90°, the second axis can be the direction of the optical axis X, and the third axis Z can be perpendicular to both the first axis Y and the optical axis X, so that the first axis, the second axis, and the third axis are perpendicular to each other in pairs. One or more parameters selected from the angular speed of the imaging device 10 rotating around the third axis, the angular acceleration of the imaging device 10 rotating around the third axis, and the rotation angle of the imaging device 10 around the third axis within the second preset time can be used as the basis for determining whether the preset rotation condition for starting recording is met.

The angular speed and angular acceleration of the imaging device 10 rotating around the third axis can characterize the rotation change trend, that is, the pose change trend of the imaging device 10 around the third axis at the current moment. The rotation condition for starting recording includes the angular speed of the imaging device 10 rotating around the third axis being greater than or equal to the third angular speed threshold, and the angular acceleration of the imaging device 10 rotating around the third axis being greater than or equal to the third angular acceleration threshold, where the third angular speed threshold is less than the first angular speed threshold, and the third angular acceleration threshold is less than the first angular acceleration threshold.

The rotation angle of the imaging device 10 around the third axis within the second preset time can characterize the rotation change amount, that is, the pose change amount of the imaging device 10 around the third axis within a period of time. The rotation condition for starting recording includes the rotation angle of the imaging device 10 around the third axis within the second preset time being greater than or equal to the third angle threshold, where the third angle threshold is less than the first angle threshold. In some implementations, the third angular speed threshold may be 90°/s, and the second preset time may be 900 ms.

When the preset rotation condition for starting recording includes the first rotation angle of the imaging device 10 rotating clockwise around the first axis within the second preset time being 40°, and the absolute value of the difference between the second rotation angle and the first rotation angle being less than 20°, the preset rotation condition for starting recording can further include the rotation angle of the imaging device 10 around the third axis being less than 30°.

In this implementation, one or more parameters selected from the angular speed of the imaging device 10 rotating around the third axis, the angular acceleration of the imaging device 10 rotating around the third axis, and the rotation angle of the imaging device 10 around the third axis within the second preset time can be used as the basis for determining whether the rotation condition for starting recording is met, providing a basis for determining whether the pose information meets the preset pose condition for starting recording. The third angular speed threshold is less than the first angular speed threshold, the third angular acceleration threshold is less than the first angular acceleration threshold, and the third angle threshold is less than the first angle threshold. Such a configuration further limits the rotation change around the third axis, when the rotation condition for starting recording is met, to be less than the rotation change around the first axis, thereby avoiding erroneous recognition of excessive rotation change around the third axis as a "twisting pose change," preventing erroneous triggering of the video recording function, and ensuring the accuracy of triggering the video recording function. Accordingly, the user experience can be improved.

In some implementations, the first axis is the main rotation axis, and the rotation around the first axis is referred to as axial rotation, while the rotation around the second axis and/or the third axis is referred to as non-axial rotation. In this implementation, by setting thresholds for axial rotation and two conditions for non-axial rotation, it is possible to prevent unintended activation of the video recording function caused by external movements, such as when the imaging device is placed in a backpack or other scenarios, resulting in erroneous triggering of the video recording function.

In some implementations, the pose information includes a displacement parameter of the imaging device 10 along a fourth axis, the fourth axis is perpendicular to an optical axis of a lens of the imaging device 10, and the pose condition for starting recording includes that at least one displacement parameter is greater than a corresponding displacement parameter threshold.

The fourth axis is set at a 90° angle with the optical axis of the lens included in the imaging device 10. In some implementations, the fourth axis can be the extension direction of the selfie stick after the selfie stick is mounted onto the imaging device.

The pose information may include a displacement parameter of the imaging device 10 along the fourth axis. The displacement parameter of the imaging device 10 may be, for example, the speed of the imaging device 10 along the fourth axis, the acceleration of the imaging device 10 along the fourth axis, the number of changes in displacement direction of the imaging device 10 along the fourth axis within a seventh preset time, the displacement distances of the imaging device 10 along two different directions within an eighth preset time,.

The pose condition for starting recording includes at least one displacement parameter being greater than a corresponding displacement parameter threshold. That is, when the displacement change amount or displacement change trend of the imaging device 10 along the fourth axis exceeds the corresponding preset standard, it is considered that the pose information of the imaging device 10 meets the pose condition for starting recording, thereby initiating video recording. In some implementations, when the displacement parameter is a displacement distance, the corresponding displacement parameter threshold is a distance value preset according to needs or experience, and the pose condition for starting recording can include the displacement distance being greater than the preset distance value.

When the imaging device 10 is operated with a selfie stick, the direction of the fourth axis may be the same as the extension direction of the selfie stick. When the user moves the selfie stick along its extension direction, the imaging device 10 can be driven to move along the fourth axis, causing the imaging device 10 to undergo a "shaking" pose change.

In this implementation, by using the displacement parameter of the imaging device 10 along the fourth axis as the pose information, and using the displacement parameter being greater than the corresponding displacement parameter threshold as the pose condition for starting recording, the movement of the imaging device 10 along the fourth axis can serve as a triggering method for the video recording function of the imaging device 10. Thus, a restriction on the pose condition for starting recording is imposed, preventing erroneous triggering caused by other pose changes of the imaging device 10 when the user does not intend to start video recording.

In some implementations, the imaging device 10 is connected to an extension member 20, and the pose information meeting the pose condition for starting recording includes: a detection signal representing a user action for initiating video recording at the imaging device 10 via the extension member 20.

The user can perform a video recording start action on the imaging device 10 via the extension member 20, for example, by controlling the imaging device 10 to rotate via the extension member 20 to generate a "twisting" pose change to perform the video recording start action. At this time, the detection signal detected by the imaging device 10 can serve as the pose information meeting the pose condition for starting recording.

In this implementation, the detection signal representing the user action for initiating video recording on the imaging device 10 via the extension member 20 is configured as the pose information meeting the pose condition for starting recording. Thus, the user can perform a video recording start action on the imaging device 10 via the extension member 20, and after completing adjustments such as camera position and selfie stick, the user can trigger the video recording function of the imaging device by controlling the pose of the imaging device via the selfie stick. The trigger method is simple and efficient, which avoids the generation of undesired video segments, and ensures that the video recorded in different scenarios can meet the actual needs of the user. Accordingly, the user experience is improved.

In some implementations, the control method for the imaging device further includes the following operation: determining the pose information of the imaging device 10 based on motion data collected by a motion sensor of the imaging device 10.

The motion data of the imaging device 10 along different axes can be obtained via a motion sensor of the imaging device 10, such as an inertial measurement unit. When the inertial measurement unit of the imaging device 10 includes a gyroscope, gyroscope data can be obtained via the gyroscope. The gyroscope data may include, for example, rotation angles, angular speeds, and rotation directions along three axes. If the gyroscope has an acceleration sensor function, the gyroscope data may also include speeds, angular speeds, and displacement distances along three axes.

It can be understood that the original gyroscope data can be directly used as part of the pose information, and other pose information can also be determined based on the original gyroscope data, providing a basis for determining whether the pose information meets the pose condition for starting recording.

In this implementation, by determining the pose information of the imaging device based on motion data collected by a motion sensor of the imaging device, the acquisition of pose information is realized, which provides a basis for determining whether the pose condition for starting recording is met. The trigger method for the video recording function is simple and efficient, which avoids the generation of undesired video segments, and ensures that the video recorded in different scenarios can meet the actual needs of the user. Accordingly, the user experience is improved.

In other implementations, the control method for the imaging device further includes the following operation: determining the pose information of the imaging device 10 based on an image captured by the imaging device 10.

The pose information of the imaging device 10 can also be obtained by analyzing the content in images captured by the imaging device 10 at multiple different moments using image recognition technology, and obtaining the pose information of the imaging device 10 based on, for example, the position change of a specific calibration object in the images captured at different moments.

In this implementation, by determining the pose information of the imaging device 10 based on images captured by the imaging device 10, the acquisition of pose information is realized, providing a basis for determining whether the pose condition for starting recording is met. The trigger method for the video recording function is simple and efficient, which avoids the generation of undesired video segments, and ensures that the video recorded in different scenarios can meet the actual needs of the user. Accordingly, the user experience is improved.

It can be understood that, in other implementations, pose information can also be obtained by combining gyroscope data with image recognition technology, that is, using visual-inertial odometry (VIO) technology to combine visual information and inertial sensor information.

In some implementations, initiating video recording in response to detecting that the pose information of the imaging device 10 meets the pose condition for starting recording includes the following operation: when the imaging device 10 is in a standby or shutdown state, switching the imaging device 10 to a power-on state and initiating video recording in response to detecting that the pose information of the imaging device 10 meets the pose condition for starting recording.

In this implementation, by detecting the pose information of the imaging device 10 in the power-off state, the imaging device 10 can be switched to the power-on state, and start video recording when the pose information meets the pose condition for starting recording, thereby enabling the quick video recording function while the imaging device 10 is in the powered-off or standby state in related technologies, and improving user experience.

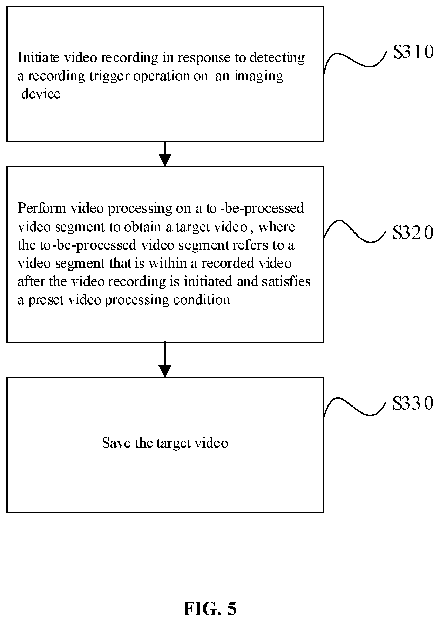

In an exemplary implementation, a control method for an imaging device 10 is provided, which can reduce the impact of undesired video segments. The imaging device 10 may include, for example, a camera, a mobile phone, or other devices having a lens assembly and an imaging module for imaging. As shown in FIG. 5, the control method for the imaging device 10 includes the following operations.

Operation S310: initiate video recording in response to detecting a recording trigger operation on the imaging device.

In operation S310, when the imaging device 10 detects a recording trigger operation performed on the imaging device 10, video recording is started. The recording trigger operation may be an operation that causes the pose information of the imaging device 10 to meet the pose condition for starting recording as described above. In some implementations, the recording trigger operation may be a rotation action that causes the imaging device 10 to undergo a "twisting" pose change.

Operation S320: perform video processing on a to-be-processed video segment to obtain a target video, where the to-be-processed video segment refers to a video segment that is within a recorded video after the video recording is started and satisfies a preset video processing condition.

Operation S330: save the target video.

In operations S320 and S330, the to-be-processed video segment is a video segment that is within a recorded video recorded after the video recording is started and satisfies a preset video processing condition. The preset video processing condition may include, for example, that the pose information meets a video processing pose condition. Video processing can be performed on the to-be-processed video segment to obtain a target video and save the target video, so that the target video does not include the to-be-processed video segment or the to-be-processed video segment is marked, ensuring that the target video meets the actual imaging needs of the user.

In some implementations, when a recording trigger operation is detected on the imaging device 10 to initiate video recording, the recorded video after video recording is started may include a video segment in which the user repeatedly performs the recording trigger operation. The content of such video segment meets the preset video processing condition and, thus, needs to be removed. Video processing can be performed on the to-be-processed video segment to obtain and save the target video, so that the target video does not include the video segment corresponding to the period during which the user repeatedly performs the recording trigger operation after video recording is started, ensuring that the target video meets the actual imaging needs of the user.

In this implementation, when a recording trigger operation is detected on the imaging device to initiate video recording, by performing video processing on the to-be-processed video segment to obtain a target video and saving the target video, the target video does not include the video segment corresponding to the period during which the user repeatedly performs the recording trigger operation after video recording is started. This operation helps to avoid the generation of undesired video segments, and ensure that the target video meets the actual shooting or imaging needs of the user, thereby improving user experience.

In some implementations, the recording trigger operation includes: an operation causing pose information of the imaging device to meet the pose condition for starting recording.

In this implementation, by using an operation causing or configuring pose information of the imaging device meet the pose condition for starting recording as the recording trigger operation, the user can trigger the video recording function of the imaging device by controlling the pose of the imaging device after completing adjustments, such as camera position and selfie stick. The triggering method is simple and efficient, which helps to avoid the generation of undesired video segments, and ensure that the video recorded in different scenarios can meet the actual needs of the user. Accordingly, the user experience is improved.

In some implementations, the video processing includes at least one of the following processing methods:
deleting the to-be-processed video segment from the recorded video;
marking the to-be-processed video segment; or
replacing the to-be-processed video segment with a pre-stored video segment.

Processing the to-be-processed video segment may include deleting the to-be-processed video segment from the recorded video, marking the to-be-processed video segment, or replacing the to-be-processed video segment with a pre-stored video segment. Marking the to-be-processed video segment facilitates subsequent deletion, preview, and other processing of the to-be-processed video segment. Deleting the to-be-processed video segment from the recorded video or replacing the to-be-processed video segment with a pre-stored video segment can ensure that the target video does not include the video segment corresponding to the period during which the user repeatedly performs the recording trigger operation after video recording is started.

In this implementation, by deleting the to-be-processed video segment from the recorded video or replacing the to-be-processed video segment with a pre-stored video segment as the video processing method, the target video does not include the video segment corresponding to the period during which the user repeatedly performs the recording trigger operation after video recording is started. By marking the to-be-processed video segment, subsequent deletion, preview, and other processing of the to-be-processed video segment are facilitated, ensuring that the target video meets the actual imaging needs of the user and improving user experience.

In some implementations, the preset video processing condition includes: the pose information of the imaging device 10 meets a video processing pose condition.

The preset video processing condition may include that the pose information of the imaging device 10 meets a video processing pose condition. When the imaging device 10 detects that the pose information meets the video processing pose condition, video processing can be performed on the to-be-processed video segment during the period when the pose information meets the video processing pose condition, facilitating the processing of the video segment corresponding to the period during which the user repeatedly performs the recording trigger operation after video recording is started.

In this implementation, by using the pose information of the imaging device 10 meeting a video processing pose condition as the preset video processing condition, when the imaging device 10 detects that the pose information meets the video processing pose condition, video processing can be performed on the to-be-processed video segment corresponding to the period during which the pose information meets the video processing pose condition. As a result, the target video does not include the video segment corresponding to the period during which the user repeatedly performs the recording trigger operation after video recording is started, avoiding the generation of undesired video segments and improving user experience.

In some implementations, the pose information includes rotation information of the imaging device 10 around a fifth axis within a fifth preset time after the video recording is started, where the fifth axis forms an angle with an optical axis of a lens included in the imaging device 10. The video processing pose condition includes at least one of the following conditions:
the angular speed of the imaging device 10 rotating around the fifth axis is greater than or equal to a fourth angular speed threshold;
the angular acceleration of the imaging device 10 rotating around the fifth axis is greater than or equal to a fourth angular acceleration threshold;
the number of changes in a rotation direction of the imaging device 10 around the fifth axis is greater than or equal to a second number threshold; or
the rotation angle of the imaging device 10 around the fifth axis is greater than or equal to a fourth angle threshold.

The to-be-processed video segment includes: a video segment, captured within the fifth preset time after the video recording is started, during which the imaging device 10 satisfies the video processing pose condition met.

The fifth axis forms an angle with an optical axis of a lens included in the imaging device 10. In some implementations, the fifth axis can be the same as the first axis. As shown in FIG. 4, the optical axis of the lens included in the imaging device 10 is X, and the angle between the fifth axis Y and the optical axis X may be, for example, 90°.

The pose information may include rotation information of the imaging device 10 around the fifth axis within the fifth preset time. One or more parameters, selected from the average angular speed of the imaging device 10 rotating around the fifth axis, the average angular acceleration of the imaging device 10 rotating around the fifth axis, the number of changes in rotation direction of the imaging device 10 around the fifth axis, and the rotation angle of the imaging device 10 around the second axis within the fifth preset time, can be used as the basis for determining whether the video processing pose condition is met.

The angular speed and angular acceleration of the imaging device 10 rotating around the fifth axis can characterize the rotation change trend, that is, the pose change trend of the imaging device 10 around the fifth axis within the fifth preset time. The condition in which the angular speed of the imaging device 10 rotating around the fifth axis is greater than or equal to the fourth angular speed threshold, and the condition in which the angular acceleration of the imaging device 10 rotating around the second axis is greater than or equal to the fourth angular acceleration threshold, can both serve as video processing pose conditions.

The number of changes in rotation direction of the imaging device 10 around the fifth axis within the fifth preset time and the rotation angle of the imaging device 10 around the fifth axis within the fifth preset time can characterize the rotation change amount, that is, the pose change amount of the imaging device 10 around the fifth axis within a period of time. The condition in which the rotation angle of the imaging device 10 around the fifth axis within the fifth preset time is greater than or equal to the fourth angle threshold, and the condition in which the number of changes in rotation direction of the imaging device 10 around the fifth axis is greater than or equal to the second number threshold, can both serve as video processing pose conditions.

It can be understood that the video processing pose condition can be the same as the pose condition for starting recording. The video segment, corresponding to the period during which the imaging device 10 meets the video processing pose condition and captured within the fifth preset time after video recording is started, can be used as the to-be-processed video segment. That is, the video segment during which the pose information again meets the pose condition for starting recording after video recording is started can be used as the to-be-processed video segment, so that the video segment, corresponding to the period during which the user repeatedly performs the recording trigger operation after video recording is started, can be processed.

In this implementation, one or more parameters, selected from the average angular speed of the imaging device 10 rotating around the fifth axis, the average angular acceleration of the imaging device 10 rotating around the fifth axis, the number of changes in rotation direction of the imaging device 10 around the fifth axis, or the rotation angle of the imaging device 10 around the second axis within the fifth preset time, can be used as the basis for determining whether the video processing pose condition is met. The video segment, corresponding to the period during which the imaging device 10 meets the video processing pose condition and captured within the fifth preset time after video recording is started, can be used as the to-be-processed video segment. The video segment corresponding to the period during which the user repeatedly performs the recording trigger operation after video recording is started can be processed, avoiding the generation of undesired video segments and improving user experience.

In some implementations, the video processing pose condition includes: after the video recording is started, a movement speed of the imaging device is less than a speed threshold. The to-be-processed video segment includes: a video segment corresponding to a period during which the movement speed is less than the speed threshold after the video recording is started.

The pose information can also indicate the movement speed of the imaging device. By using a condition during which the movement speed of the imaging device after video recording is started is less than a speed threshold as the video processing pose condition, the video segment corresponding to the period during which the movement speed is less than the speed threshold after video recording is started can be used as the to-be-processed video segment. Therefore, the video segment corresponding to the period during which the movement speed is less than the speed threshold can be deleted, marked, or otherwise processed.

In this implementation, by using a condition during which the movement speed of the imaging device after video recording is started being less than a speed threshold as the video processing pose condition, the video segment corresponding to the period during which the movement speed is less than the speed threshold after video recording is started can be used as the to-be-processed video segment. When the user is in a sports scenario such as skiing, the video segment recorded during the initial, slower movement can be processed, so that only the target video only retains the faster skiing process after acceleration begins, thereby improving the user experience.

In some implementations, the imaging device 10 is connected to an extension member 20, and the video processing pose condition includes: within a sixth preset time after the video recording is started, a pose change of the imaging device 10 indicating that a user is performing a first preset operation. The first preset operation includes changing a length of the extension member 20 connected to the imaging device 10. The to-be-processed video segment includes: a video segment corresponding to a period during which the user performs the first preset operation within a preset time after the video recording is started.

By using a condition during which a pose change of the imaging device 10 indicating that a user is performing a first preset operation within a sixth preset time after the video recording is started, as the video processing pose condition, the video segment corresponding to the period during which the user performs the first preset operation within a preset time after the video recording is started can be used as the to-be-processed video segment. Therefore, the video segment corresponding to the period during which the user performs the first preset operation can be deleted, marked, or otherwise processed.

The first preset operation may include changing a length of the extension member 20 connected to the imaging device 10. The process of the user changing the length of the extension member 20 connected to the imaging device 10 is the process of adjusting the selfie stick, and the video segment recorded during this process is the to-be-processed video segment that needs video processing. In some implementations, whether the motion data included in the pose information indicating that the user has changed the length of the extension member 20 connected to the imaging device 10 can be identified by model training based on the motion data included in the pose information.

In this implementation, by using a condition in which a pose change of the imaging device 10 indicating that a user is performing a first preset operation within a sixth preset time after the video recording is started as the video processing pose condition, the video segment corresponding to the period during which, the user performs the first preset operation within the sixth preset time after the video recording is started, can be used as the to-be-processed video segment. Therefore, the video segment recorded during the process of the user adjusting the length of the selfie stick can be processed, ensuring that the target video does not include the video segment corresponding to adjusting the selfie stick, avoiding the generation of undesired video segments, and improving user experience.

In some implementations, the video recording includes audio recording. After the video recording is started, the control method for the imaging device 10 further includes the following operation: performing a preset function corresponding to a second preset operation in response to detecting a second preset operation performed by a user on the imaging device 10; and processing an audio segment and a video segment recorded during the execution of the second preset operation by the user, to obtain a target audio segment and a target video segment.

When the video recording is started, audio recording is also started simultaneously, so that the recording process includes both video recording and audio recording, obtaining an audio-video file comprising both sound and images. After the video recording is started by the control method described in the above implementations, in response to detecting that the second preset operation executed by the user on the imaging device 10, the imaging device 10 is controlled to perform a preset function corresponding to the second preset operation. In some implementations, the second preset operation may include rotating the imaging device 10 and issuing a voice command. The user can trigger the corresponding preset function by performing different second preset operations. The preset functions after video recording is started may include pausing video recording, stopping video recording, etc.

The user performs the second preset operation before the end of video recording, so that the audio segment and video segment during the execution of the second preset operation by the user are included in the recorded audio and video. These audio segment and video segment are also undesired and, thus, need to be removed by post-editing, which would otherwise result in poor final video quality and user experience. Therefore, upon detecting a second preset operation by a user for the imaging device 10 is recognized, the imaging device 10 is not only controlled to perform a preset function corresponding to the second preset operation, but also to process the audio segment and video segment recorded during the execution of the second preset operation by the user, so as to ensure that the obtained target audio segment and target video segment do not include the undesired content.

In some implementations, processing the audio segment and video segment recorded during the execution of the second preset operation by the user may be performed when the preset function corresponding to the second preset operation is performed, or when the video recording ends. The processing method for the audio segment and video segment recorded during the execution of the second preset operation by the user may include deleting the audio segment and video segment.

In this implementation, after the video recording is started, upon detecting the second preset operation performed by the user on the imaging device 10, the preset function corresponding to the second preset operation is performed, so that the corresponding preset function is triggered by the second preset operation. By processing the audio segment and video segment recorded during the execution of the second preset operation, it is ensured that the obtained target audio segment and target video segment do not include the undesired content recorded during the execution of the second preset operation by the user, without the need for post-editing. This improves the diversity of preset function trigger methods, while ensuring that the target audio segment and target video segment recorded in different scenarios can meet the actual needs of the user, thereby improving user experience.

In some implementations, the preset function includes at least one of the following functions: pausing video recording; ending video recording; starting voice control; ending voice control; marking a video; or marking time.

After video recording is started, the user can trigger the corresponding preset function by performing the second preset operation. The preset function may include one or more of pausing video recording, ending video recording, starting voice control, ending voice control, marking a video, or marking time.

The function of pausing video recording can pause the current video recording process. After pausing video recording, the user can again start video recording by controlling the pose of the imaging device 10, so that the pose information meets the pose condition for starting recording. The function of ending video recording can end the current video recording process, and the time at which the function of ending video recording is performed is used as the end time of the video recording process. The functions of starting voice control and ending voice control can respectively realize the start and end of the voice control function. When the voice control is started, the user can control the imaging device 10 by issuing voice commands. The function of marking a video can mark the audio and video segment within a specific time range, facilitating the user to quickly find, browse, and edit the corresponding audio and video segment through the mark. The function of marking time can mark a specific moment, facilitating the user to record special moments during the video recording process through the mark. In this implementation, the imaging device receives the user's voice command through a microphone, such as starting video recording, stopping video recording, marking a video, marking time, etc.

In this implementation, one or more of functions, selected from pausing video recording, ending video recording, starting voice control, ending voice control, marking a video, or marking time, are used as the preset function. The user can trigger the required function during the video recording process by performing the second preset operation, thereby enhancing the operability of the video recording process and improving user experience.

In some implementations, the second preset operation includes rotating the imaging device 10, or the second preset operation includes issuing a voice command, or the second preset operation includes rotating the imaging device 10 and issuing a voice command.

In some implementations, the second preset operation may include rotating the imaging device 10. The imaging device 10 is controlled to rotate with a specific rotation action or rotation method, so as to trigger the corresponding preset function by the second preset operation. Upon detecting that the user performs the second preset operation of rotating the imaging device 10, the imaging device 10 is controlled to perform the preset function corresponding to the second preset operation of rotating the imaging device 10. The audio segment and video segment recorded during the rotation of the imaging device 10 are processed. Thus, the undesired video segments corresponding to the period when the user rotates the imaging device 10 may be prevented from being included in the final target audio segment and target video segment.

The second preset operation may also include issuing a voice command. The user's voice command can be recognized by a voice recognition module of the imaging device 10, and the corresponding preset function can be performed according to the recognition result, and the audio segment and video segment recorded during the issuance of the voice command by the user can be processed. When it is detected that the user performs the second preset operation of issuing a voice command, the imaging device 10 is controlled to perform the preset function corresponding to the second preset operation of issuing a voice command, and the audio segment and video segment recorded during the issuance of the voice command are processed. Therefore, the undesired video segments corresponding to the period when the user issues the voice command may be prevented from being included in the final target audio segment and target video segment.

In some implementations, after video recording is started, when the user issues a voice command such as "pause video recording," the imaging device 10 can perform the corresponding preset function of pausing video recording, and at this time or when the video recording ends, process the audio segment and video segment recorded during the issuance of the "pause video recording" voice command. This ensure that the final target audio segment and target video segment do not include these undesired contents.

In this implementation, by using rotating the imaging device 10 and issuing a voice command as the second preset operation, the user can trigger the corresponding preset function by rotating the imaging device 10 or issuing a voice command, etc. The trigger method is simple and efficient, without the need to readjust the distance between the imaging device 10, particularly in scenarios where the imaging device 10 is used with a selfie stick. By processing the audio segment and video segment recorded during the period when the user rotates the imaging device 10 or issues a voice command, the undesired video segments, which are formed during the period when the user rotates the imaging device 10 or issues a voice command, can be prevented from being included in the final target audio segment and target video segment. Thus, the diversity of preset function trigger methods is improved, while ensuring that the target audio and video recorded in different scenarios can meet the actual needs of the user. Accordingly, the user experience.

In some implementations, if the second preset operation includes rotating the imaging device 10, different rotation methods correspond to different preset functions, or different rotation actions correspond to different preset functions, or different rotation methods and rotation actions correspond to different preset functions.

Due to the diversity of preset functions that can be performed after video recording is started, when the second preset operation includes rotating the imaging device 10, different rotation methods and different rotation actions can correspond to different preset functions. In some implementations, different rotation methods such as rotating around different axes or rotating at different rotation speeds, and different rotation actions such as rotating by different angles in different rotation directions, can correspond to different preset functions. The user can directly control or drive, via the selfie stick, the imaging device 10 to rotate in different rotation methods and in different rotation actions, so as to control the imaging device 10 to perform different preset functions after the video recording is started.

In this implementation, different rotation methods and rotation actions of the imaging device 10 correspond to different preset functions and, thus, multiple different preset functions can be realized by performing the second preset operation of rotating the imaging device 10, thereby ensuring the diversity and accuracy of preset function triggering and improving user experience.

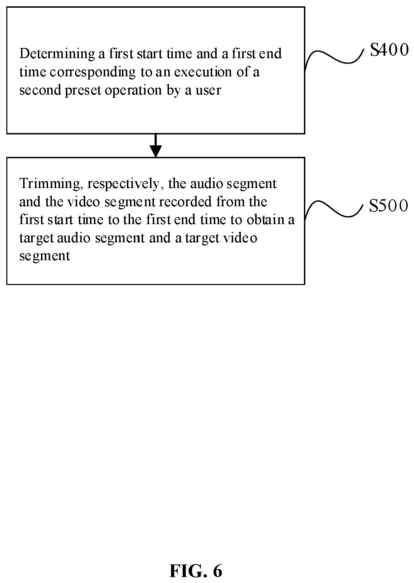

In some implementations, as shown in FIG. 6, processing the audio segment and video segment recorded during the period when the user performs the second preset operation to obtain a target audio segment and a target video segment includes the following operations.

Operation S400: determining a first start time and a first end time corresponding to an execution of a second preset operation by a user.

In operation S400, in response to detecting that the user performs the second preset operation for the imaging device 10, the first start time and the first end time corresponding to the user's execution of the second preset operation can be determined according to the detection result. The time interval from the first start time to the first end time defines the duration of the user's execution of the second preset operation. In some implementations, when the second preset operation includes rotating the imaging device 10, the start and stop times of the imaging device 10 rotating can be recognized according to gyroscope data, and these two times can be used as the first start time and the first end time of the user's execution of the second preset operation, respectively. When the second preset operation includes issuing a voice command, the time range corresponding to the voice command can be determined according to a voice algorithm, and the start and end times of this time range can be used as the first start time and the first end time, respectively.

Operation S500: trimming the audio segment and the video segment recorded from the first start time to the first end time to obtain a target audio segment and a target video segment.

In operation S500, the time interval from the first start time to the first end time is the duration during which the user performs the second preset operation. By trimming the audio segment and video segment recorded from the first start time to the first end time, the audio segment and video segment recorded during the duration of the user's second preset operation are directly removed. Thus, these parts of the audio segment and video segment are no longer retained in the final target audio segment and target video segment, realizing automatic deletion of undesired video segments.

In this implementation, by determining the first start time and the first end time of the user's execution of the second preset operation, and trimming the audio segment and the video segment recorded from the first start time to the first end time to obtain the target audio segment and the target video segment, automatic recognition and deletion of the audio segment and video segment recorded during the period when the user performs the second preset operation are realized. Thus, the obtained target audio segment and target video segment are ensured to not include the undesired video segments recorded during the period when the user performs the second preset operation, without the need for post-editing. This improves the diversity of preset function trigger methods while ensuring that the target audio and video recorded in different scenarios can meet the actual needs of the user, thereby improving the user experience.

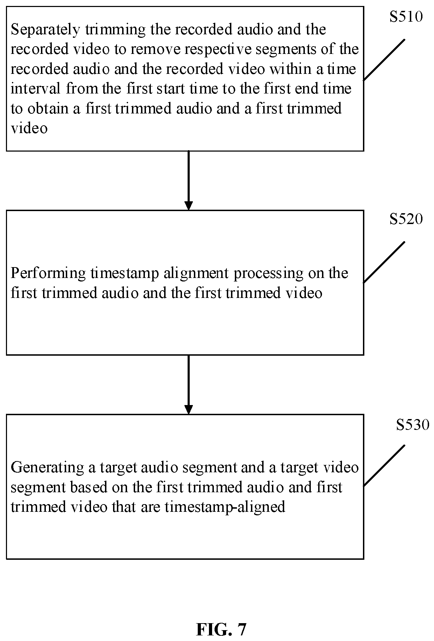

In some implementations, as shown in FIG. 7, performing cutting processing on the audio segment and the video segment recorded from the first start time to the first end time to obtain the target audio segment and the target video segment includes the following operations.

Operation S510: separately trimming the recorded audio and the recorded video to remove respective segments of the recorded audio and the recorded video within a time interval from the first start time to the first end time to obtain a first trimmed audio and a first trimmed video.

In operation S510, the audio and video obtained from the current video recording process can be trimmed, and the audio segment and video segment during the period when the user performs the second preset operation, that is, from the first start time to the first end time, can be removed from the recorded audio and recorded video, thereby obtaining a first trimmed audio and a first trimmed video that do not include the corresponding audio segment and the corresponding video segment.

Operation S520: performing timestamp alignment processing on the first trimmed audio and the first trimmed video.

In operation S520, the first trimmed audio and the first trimmed video each has its own timestamp. To ensure that the time correspondence between the first trimmed audio and the second trimmed video is the same as the actual voice-image correspondence, timestamp alignment processing is performed on the first cut audio and the first cut video, so that the audio data can be synchronized with the video data timestamps.

Operation S530: generating a target audio segment and a target video segment based on the first trimmed audio and first trimmed video that are timestamp-aligned.

In operation S530, the target audio segment and the target video segment with accurate voice-image alignment can be generated based on the timestamp-aligned first trimmed audio and first trimmed video.

In this implementation, by trimming the recorded audio and video respectively, the audio and video segments from the first start time to the first end time are removed to obtain the first trimmed audio and the first trimmed video. By performing timestamp alignment processing on the first trimmed audio and the first trimmed video, the target audio segment and the target video segment are generated based on the timestamp-aligned first trimmed audio and first trimmed video. This process achieves effective trimming of the audio segment and video segment recorded from the first start time to the first end time to obtain the target audio segment and target video segment, and ensures the accurate synchronization of the target audio and the target video, i.e., high voice-image alignment accuracy between the target audio and the target video. Therefore, the final video quality and the user experience are improved.

In some implementations, the second preset operation includes issuing a voice command. Processing the audio segment and the video segment recorded during the period when the user performs the second preset operation includes the following operation: performing mute processing on the audio segment recorded during the period when the user performs the second preset operation.

When the second preset operation includes issuing a voice command, the user triggers the corresponding preset function by issuing a voice command. Thus, the audio segment recorded during the execution of the second preset operation includes the voice command issued by the user, while the video segment recorded during the execution of the second preset operation may be the video that the user wants to retain in the final target audio and video. Therefore, mute processing can be performed on the audio segment recorded during the execution of the second preset operation, selectively removing the sound from the audio segment while retaining the image in the video segment. Accordingly, the final target audio segment and target video segment can eliminate the presence of the voice command, while retaining the video content recorded during the period when the voice command is issued.

In some implementations, after the user issues a "pause video recording" voice command to control the imaging device 10 to perform the preset function of pausing video recording, mute processing can be performed on the audio segment recorded during the period when the user issues the "pause video recording" voice command, removing the voice of "pause video recording" while retaining the image part corresponding to the voice.

In this implementation, when the second preset operation includes issuing a voice command, mute processing is performed on the audio segment recorded during the period of execution of the second preset operation. Therefore, the voice in the audio segment is eliminated while retaining the image in the video segment, increasing the ways of processing undesired video segments, ensuring the actual correspondence between voice and image in the target audio segment and target video segment while protecting the integrity of the video, and improving user experience.

In some implementations, performing mute processing on the audio segment recorded during the period when the user performs the second preset operation includes the following operation: replacing the audio segment in the recorded audio during the second preset operation with a muted audio segment to obtain the target audio segment.

The audio segment, within the recorded audio corresponding to the current video recording process, which is recorded during the period when the user performs the second preset operation (i.e., from the first start time to the first end time), can be replaced with a muted audio segment. That is, the gap after trimming the audio segment can be filled with the muted audio segment, thereby obtaining the target audio segment having the same duration as the initial audio. The target audio segment no longer includes the user's voice command.

In this implementation, by replacing the audio segment that is within the recorded audio and recorded during the period when the execution of the second preset operation with a muted audio segment, the duration of the target audio segment is the same as that of the initial audio, and the target audio segment no longer includes the user's voice command. Therefore, mute processing of the audio segment recorded during the period when the user performs the second preset operation is realized, and the target audio segment is obtained. Accordingly, the final video quality and the user experience are improved.

In some implementations, initiating video recording includes initiating video pre-recording. In response to detecting the second preset operation performed by the user on the imaging device 10, performing the preset function corresponding to the second preset operation includes the following operation: initiating official video recording in response to detecting a voice command issued by the user to start formal recording.

The imaging device 10 also has a video pre-recording function. After the video pre-recording function is enabled, the imaging device 10 may perform loop recording based on a predetermined cycle period. After the user starts the formal video recording, the video recorded during the most recent cycle period of the loop recording before starting the formal video recording, as well as the video recorded after starting the formal video recording, are used as the final recorded video. In some implementations, if the predetermined cycle period for the loop recording is 3 minutes, after the video pre-recording function is enabled, the loop recording is performed based on a cycle period of 3 minutes. After each new cycle period starts, the video recorded during the previous cycle period is deleted from the cache. After the formal video recording is started, the video recorded within up to 3 minutes before starting the formal video recording, along with the video recorded after starting formal video recording, are used as the final video.

When the video pre-recording function is enabled by the control method for the imaging device 10 as described above, the user can control the imaging device 10 to perform the preset function for starting formal video recording by issuing a voice control command. In this scenario, the user desires that the recorded audio and video includes the audio and video recorded during the period when the voice command is issued, while muting the audio segment recorded during the period when the voice command is issued. In this case, the audio segment recorded during the period when the user performs the second preset operation can be processed by mute processing.

In this implementation, initiating video recording includes initiating video pre-recording. When a voice command issued by the user to start formal recording is detected, formal video recording is started, so that when the imaging device 10 performs the pre-recording function, the audio segment recorded during the period when the user performs the second preset operation can be processed by mute processing. The voice in the audio segment can be eliminated while retaining the image in the video segment, ensuring the actual correspondence between voice in the target audio segment and image in the target video segment while protecting the integrity of the video, realizing the processing of undesired video segments in the video pre-recording scenario, and improving the user experience.

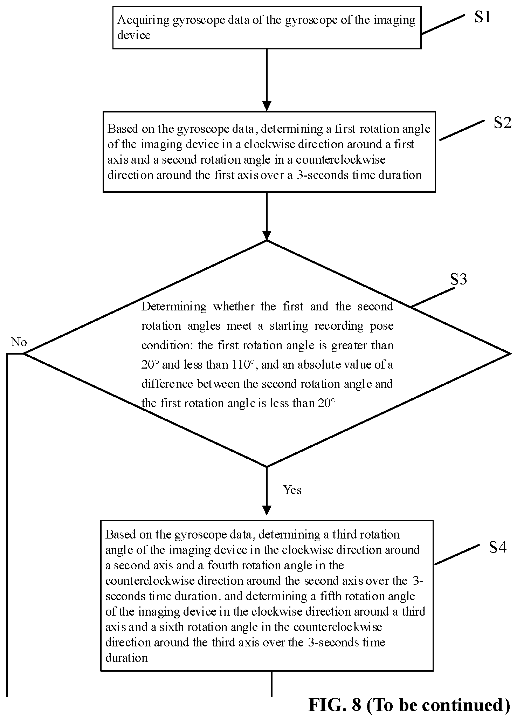

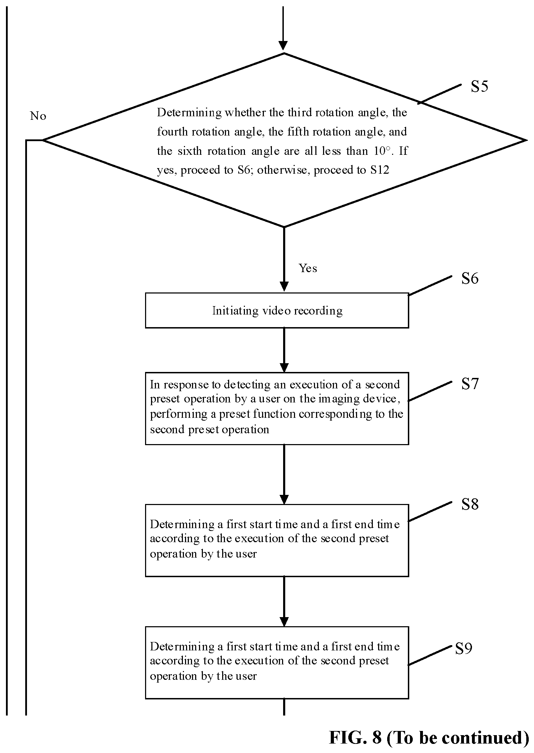

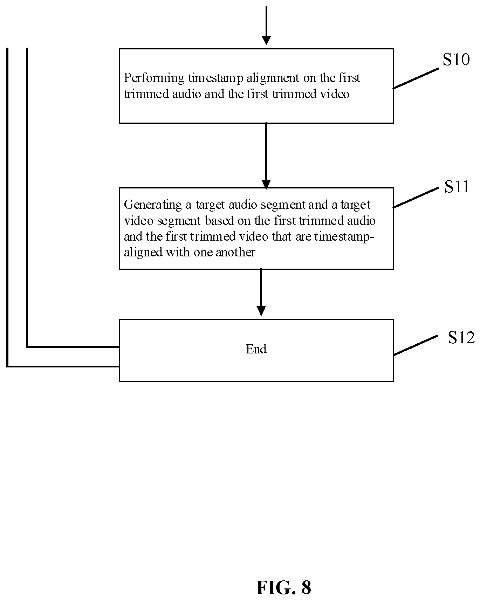

In an exemplary implementation, a control method for an imaging device 10 is provided. As shown in FIG. 8, the control method for the imaging device 10 includes the following operations.

Operation S1: acquiring gyroscope data of a gyroscope included in the imaging device.

Operation S2: based on the gyroscope data, determining a first rotation angle of the imaging device in a clockwise direction around a first axis and a second rotation angle in a counterclockwise direction over a 3-seconds time duration.

Operation S3: determining whether the first rotation angle and the second rotation angle meet the following pose condition for starting recording: the first rotation angle is greater than 20° and less than 110°, and an absolute value of a difference between the second rotation angle and the first rotation angle is less than 20°. If yes, proceed to S4; otherwise, proceed to S12.

Operation S4: based on the gyroscope data, determining a third rotation angle of the imaging device in the clockwise direction around a second axis and a fourth rotation angle in the counterclockwise direction over the 3-second time duration, and determining a fifth rotation angle of the imaging device in the clockwise direction around a third axis and a sixth rotation angle in the counterclockwise direction over the 3-second time duration.

Operation S5: determining whether the third rotation angle, the fourth rotation angle, the fifth rotation angle, and the sixth rotation angle are all less than 10°. If yes, proceed to S6; otherwise, proceed to S12.

Operation S6: initiating video recording.

Operation S7: in response to detecting an execution of a second preset operation by a user on the imaging device, performing a preset function corresponding to the second preset operation.

Operation S8: determining a first start time and a first end time according to the execution of the second preset operation by the user.

Operation S9: respectively, trimming a recorded audio and a recorded from the first start time to the first end time to obtain a first trimmed audio and a first trimmed video.

Operation S10: performing timestamp alignment on the first trimmed audio and the first trimmed video.

Operation S11: generating a target audio segment and a target video segment based on the first trimmed audio and the first trimmed video that are timestamp-aligned with one another.

Operation S12: end.

In this implementation, by acquiring the pose information of the imaging device 10 and controlling the imaging device 10 to initiate video recording when the pose information meets a pose condition for starting recording, the user can trigger the video recording function of the imaging device 10 by controlling the pose of the imaging device 10 after the adjustments are completed, such as camera position and selfie stick. The trigger method is simple and efficient, and avoids the generation of undesired video segments. When a second preset operation performed by a user at the imaging device 10 is recognized, the preset function corresponding to the second preset operation is performed, so that the corresponding preset function is triggered by the second preset operation. By processing the audio segment and the video segment recorded during the period when the user performs the second preset operation, it is ensured that the obtained target audio segment and target video segment do not include the undesired video segments recorded during the period when the user performs the second preset operation, without the need for post-editing. This improves the diversity of preset function trigger methods while ensuring that the target audio and video recorded in different scenarios can meet the actual needs of the user, thereby improving the user experience.

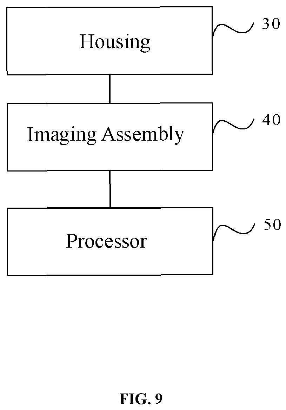

In an exemplary implementation, an imaging device 10 is provided. As shown in FIG. 9, the imaging device 10 includes a housing 30, an imaging assembly 40, and one or more processors 50. The imaging assembly 40 is disposed in the housing 30 and is configured to capture an image. The one or more processors 50 are connected to the imaging assembly 40 and are configured to: initiate video recording in response to detecting that pose information of the imaging device 10 meets a pose condition for starting recording.

As shown in FIG. 4, the imaging device 10 includes a housing 30, one or more processors 50 disposed in the housing 30. The processor 50 may include an image signal processor (ISP), a microcontroller unit (MCU), a video processing unit (VPU), or other devices with information processing capability. The imaging assembly 40 disposed in the housing 30 includes a lens 60 and an image sensor. A motion sensor disposed in the housing 30 may include a gyroscope, an accelerometer, a magnetometer, or other sensors capable of detecting motion information. The motion information may include movement speed, acceleration, angular speed, angular acceleration, etc. In addition, the imaging device 10 may further include a memory, a power supply, and other components.

In this implementation, by executing the control method for the imaging device 10 via the processor 50, the imaging device 10 is controlled to initiate video recording when pose information meets a pose condition for starting recording, so that the user can trigger the video recording function of the imaging device 10 by controlling the pose of the imaging device 10 after completing adjustments such as camera position and selfie stick. The trigger method is simple and efficient, which avoids the generation of undesired video segments, ensures that the video recorded in different scenarios can meet the actual needs of the user, and improves the user experience.

In some implementations, the imaging device 10 further includes a touch display screen connected to the processor 50. Before initiating video recording in response to detecting that the pose information of the imaging device 10 meets the pose condition for starting recording, the processor 50 is further configured to: control the touch display screen to display a target function control; and control the imaging device 10 to be in a target function on-state in response to a function enable operation by a user performed on the target function control. The target function is configured to initiate video recording in response to detecting that the pose information of the imaging device 10 meets the pose condition for starting recording.

In some implementations, the imaging device 10 further includes an indicating device connected to the processor 50. The processor 50 is further configured to: when the imaging device 10 initiates video recording, control the indicating device to indicate that the imaging device 10 has entered a video recording state.

In some implementations, the indicating device includes a speaker, and the speaker is configured to broadcast voice indication information when the imaging device 10 initiates video recording, where the voice indication information is configured to indicate that the imaging device 10 has entered the video recording state. The processor 50 is further configured to: perform audio processing on audio recorded during broadcasting the voice indication information to obtain target audio with the voice indication information removed; and save the target audio and a corresponding recorded video segment.

In some implementations, the pose information includes rotation information of the imaging device 10. Initiating video recording in response to detecting that the pose information of the imaging device 10 meets the pose condition for starting recording includes: initiating video recording in response to detecting that the rotation information meets a rotation condition for starting recording.

In some implementations, the rotation information includes rotation information of the imaging device 10 around a first axis; the first axis forms an angle with an optical axis of the lens 60 included in the imaging device 10; and/or the first axis passes through the housing 30 of the imaging device 10.

In some implementations, the rotation condition for starting recording includes at least one of the following conditions: an angular speed of the imaging device 10 rotating around the first axis is greater than or equal to a first angular speed threshold; an angular acceleration of the imaging device 10 rotating around the first axis is greater than or equal to a first angular acceleration threshold; a number of changes in a rotation direction of the imaging device 10 around the first axis within a first preset time is greater than or equal to a number threshold; or a rotation angle of the imaging device 10 around the first axis within a second preset time is greater than or equal to a first angle threshold.

In some implementations, the rotation condition for starting recording includes: the imaging device 10 rotates clockwise by a first rotation angle around the first axis and counterclockwise by a second rotation angle around the first axis within a third preset time; and an absolute value of a difference between the second rotation angle and the first rotation angle is less than 20 degrees; and/or the first rotation angle is greater than or equal to 20 degrees and less than or equal to 110 degrees; and/or the second rotation angle is greater than or equal to 20 degrees and less than or equal to 110 degrees.

In some implementations, the rotation condition for starting recording includes: the rotation information of the imaging device 10 around the first axis meets a first sub-condition for starting rotation recording, and after a fourth preset time interval, the rotation information of the imaging device 10 around the first axis meets a second sub-condition for starting rotation recording.

In some implementations, the rotation information further includes: rotation information of the imaging device 10 around a second axis, and the first axis forms an angle with the second axis. The rotation condition for starting recording includes at least one of the following conditions: an angular speed of the imaging device 10 rotating around the second axis is less than or equal to a second angular speed threshold, and the second angular speed threshold is less than the first angular speed threshold; an angular acceleration of the imaging device 10 rotating around the second axis is less than or equal to a second angular acceleration threshold, and the second angular acceleration threshold is less than the first angular acceleration threshold; or a rotation angle of the imaging device 10 around the second axis within the second preset time is less than or equal to a second angle threshold, and the second angle threshold is less than the first angle threshold.

In some implementations, the rotation information further includes rotation information of the imaging device 10 around a third axis, and the first axis, the second axis, and the third axis are perpendicular to each other in pairs. The rotation condition for starting recording further includes at least one of the following conditions: an angular speed of the imaging device 10 rotating around the third axis is less than or equal to a third angular speed threshold, and the third angular speed threshold is less than the first angular speed threshold; an angular acceleration of the imaging device 10 rotating around the third axis is less than or equal to a third angular acceleration threshold, and the third angular acceleration threshold is less than the first angular acceleration threshold; or a rotation angle of the imaging device 10 around the third axis within the second preset time is less than or equal to a third angle threshold, and the third angle threshold is less than the first angle threshold.

In some implementations, the pose information includes a displacement parameter of the imaging device 10 along a fourth axis, the fourth axis is perpendicular to an optical axis of a lens 60 of the imaging device 10. The pose condition for starting recording includes: the displacement parameter is greater than a corresponding displacement parameter threshold.

In some implementations, the imaging device 10 includes a mounting member, the mounting member is configured to connect to an extension member 20, and the pose information meeting the pose condition for starting recording includes: a detection signal for characterizing a user performing a video recording start action on the imaging device 10 via the extension member 20.

In some implementations, the imaging device 10 further includes: a motion sensor disposed within the housing 30, the motion sensor is configured to collect motion data of the imaging device 10; and the processor 50 is further configured to: determine the pose information of the imaging device 10 based on the motion data collected by the motion sensor of the imaging device 10.

In some implementations, the processor 50 is further configured to: determine the pose information of the imaging device 10 based on the image captured by the imaging assembly 40.

In some implementations, the processor 50 is configured to: when the imaging device 10 is in a standby or shutdown state, switch the imaging device 10 to a power-on state and initiate video recording in response to detecting that the pose information of the imaging device 10 meets the pose condition for starting recording.

In an exemplary implementation, an imaging device 10 is provided. As shown in FIG. 9, the imaging device 10 includes a housing 30, an imaging assembly 40, and one or more processors 50. The imaging assembly 40 is disposed in the housing 30 and is configured to capture an image. The one or more processors 50 are connected to the imaging assembly 40 and are configured to: initiate video recording in response to detecting a recording trigger operation on the imaging device 10; and perform video processing on a to-be-processed video segment to obtain a target video, where the to-be-processed video segment is a video segment within a video recorded after the video recording is started and meeting a preset video processing condition; and save the target video.

In some implementations, the processor 50 is configured to: perform video processing including at least one of the following operations: deleting the to-be-processed video segment from the recorded video; marking the to-be-processed video segment; or replacing the to-be-processed video segment with a pre-stored video segment.

In some implementations, the preset video processing condition includes: the pose information of the imaging device 10 meets a video processing pose condition.

In some implementations, the pose information includes rotation information of the imaging device 10 around a fifth axis within a fifth preset time after the video recording is started, and the fifth axis forms an angle with an optical axis of a lens 60 of the imaging device 10. The video processing pose condition includes at least one of the following conditions: an angular speed of the imaging device 10 rotating around the fifth axis is greater than or equal to a fourth angular speed threshold; an angular acceleration of the imaging device 10 rotating around the fifth axis is greater than or equal to a fourth angular acceleration threshold; a number of changes in a rotation direction of the imaging device 10 around the fifth axis is greater than or equal to a second number threshold; or a rotation angle of the imaging device 10 around the fifth axis is greater than or equal to a fourth angle threshold. The to-be-processed video segment includes: a video segment, recorded within the fifth preset time after the video recording is started, during which imaging device 10 meets the video processing pose condition.

In some implementations, the video processing pose condition includes: after the video recording is started, a movement speed of the imaging device 10 is less than a speed threshold; and the to-be-processed video segment includes: a video segment corresponding to a period during which the movement speed is less than the speed threshold after the video recording is started.

In some implementations, the imaging device 10 is provided with a mounting member, the mounting member is configured to connect to an extension member 20. The video processing pose condition includes: within a sixth preset time after the video recording is started, a pose change of the imaging device 10 indicates that a user is performing a first preset operation. The first preset operation includes changing a length of the extension member 20 connected to the imaging device 10. The to-be-processed video segment includes: a video segment corresponding to a period during which the user performs the first preset operation within a preset time after the video recording is started.

In some implementations, the video recording includes audio recording. After the video recording is started, the processor 50 is further configured to: perform a preset function corresponding to a second preset operation in response to detecting the second preset operation performed by a user on the imaging device 10, and process an audio segment and a video segment recorded during the user performing the second preset operation to obtain a target audio segment and a target video segment.

In some implementations, the preset function includes at least one of the following functions: pausing video recording; ending video recording; starting voice control; ending voice control; marking a video; or marking time.

In some implementations, the second preset operation includes rotating the imaging device 10 and/or issuing a voice command.

In some implementations, if the second preset operation includes rotating the imaging device 10, different rotation methods and/or rotation actions correspond to different preset functions.

In some implementations, processing the audio segment and the video segment recorded during the period when the user performs the second preset operation to obtain the target audio segment and the target video segment includes: determining a first start time and a first end time corresponding to an execution of the second preset operation by the user; and trimming the audio segment and the video segment recorded from the first start time to the first end time to obtain the target audio segment and the target video segment.

In some implementations, trimming the audio segment and the video segment recorded from the first start time to the first end time to obtain the target audio segment and the target video segment includes: trimming, respectively, the recorded audio and the recorded video from the first start time to the first end time to obtain a first trimmed audio and a first trimmed video; performing timestamp alignment on the first cut audio and the first cut video; and generating the target audio segment and the target video segment based on the timestamp-aligned first trimmed audio and first trimmed video.

In some implementations, the second preset operation includes issuing a voice command. Processing the audio segment and the video segment recorded during the period when the user performs the second preset operation includes: performing mute processing on the audio segment recorded during the period when the user performs the second preset operation.

In some implementations, performing mute processing on the audio segment recorded during the period when the user performs the second preset operation includes: replacing the audio segment in the recorded audio during the second preset operation with a muted audio segment to obtain the target audio segment.

In some implementations, initiating video recording includes initiating video pre-recording. Performing the preset function corresponding to the second preset operation in response to detecting the second preset operation by the user for the imaging device 10 includes: initiating formal video recording in response to detecting a voice command issued by the user to start formal recording.

In this specification, the various implementations or modes are described in a progressive manner, and each implementation focuses on the differences from other implementations. The same or similar parts among the various implementations can be referred to each other.

In the description of this specification, references to the terms "implementation," "exemplary implementation," and the like mean that a specific feature, structure, material, or characteristic described in connection with the implementation or example is included in at least one implementation or example of the present disclosure.

In this specification, the illustrative expressions of the above terms do not necessarily refer to the same implementation or example. Furthermore, the specific features, structures, materials, or characteristics described can be combined in any suitable manner in one or more implementations or examples.

It can be understood that the terms "first," "second," etc. used in the present disclosure may be used to describe various structures, but these structures are not limited by these terms. These terms are only used to distinguish one structure from another.

In one or more drawings, the same elements are denoted by similar reference numerals. For clarity, multiple parts in the drawings are not drawn to scale. In addition, some well-known parts may not be shown. For simplicity, a structure obtained after several operations may be described in one drawing. Many specific details of the present disclosure, such as device structure, materials, dimensions, processing techniques, and technologies, are described below to facilitate a clearer understanding of the present disclosure. However, as those skilled in the art can understand, the present disclosure can be implemented without these specific details.

Finally, it should be noted that the above implementations are only used to illustrate the technical solutions of the present disclosure, and not to limit them. Although the present disclosure is described in detail with reference to the above implementations, those skilled in the art should understand that modifications can still be made to the technical solutions described in the above implementations, or some or all of the technical features can be equivalently replaced. These modifications or replacements do not cause the essence of the corresponding technical solutions to depart from the scope of the technical solutions of the implementations of the present disclosure.

### Industrial Applicability

The control method for an imaging device and the imaging assembly provided in the implementations of the present disclosure, by controlling the imaging device to initiate video recording when pose information meets a pose condition for starting recording, enable the user to trigger the video recording function of the imaging device by controlling the pose of the imaging device after completing adjustments such as camera position and selfie stick. The trigger method is simple and quick, avoids the generation of undesired video segments, ensures that the video recorded in different scenarios can meet the actual needs of the user, and improves user experience.

## Claims

1. A method for controlling an imaging device, applied to an imaging device, **characterized in that** the imaging device has a video recording function, and the method comprises:
initiating video recording, in response to detecting that pose information of the imaging device meets a recording-start pose condition.

2. The method for controlling an imaging device according to claim 1, **characterized in that** before initiating video recording in response to detecting that the pose information of the imaging device meets the recording-start pose condition, the method further comprises:
controlling the imaging device to be in a target function on-state in response to a function enable operation performed by a user, wherein the target function is configured to initiate the video recording in response to detecting that the pose information of the imaging device meets the recording-start pose condition.

3. The method for controlling an imaging device according to claim 1, **characterized in that** the method further comprises:
when the imaging device initiates the video recording, controlling an indicating device to indicate that the imaging device has entered a video recording state.

4. The method for controlling an imaging device according to claim 3, **characterized in that** the indicating device comprises a speaker configured to broadcast voice indication information when the imaging device initiates the video recording, and the voice indication information is configured to indicate that the imaging device has entered the video recording state, and
the method further comprises:
processing audio recorded during broadcasting the voice indication information; and
obtaining target audio with the voice indication information removed; and
saving the target audio and a corresponding recorded video segment.

5. The method for controlling an imaging device according to any one of claims 1 to 4, **characterized in that** the pose information comprises rotation information of the imaging device, and initiating video recording in response to detecting that the pose information of the imaging device meets the recording-start pose condition comprises:
initiating the video recording in response to detecting that the rotation information meets a recording-start rotation condition.

6. The method for controlling an imaging device according to claim 5, **characterized in that** the rotation information comprises rotation information of the imaging device around a first axis; and
wherein the first axis forms an angle with an optical axis of a lens of the imaging device; and/or the first axis passes through the imaging device.

7. The method for controlling an imaging device according to claim 6, **characterized in that** the recording-start rotation condition comprises at least one of the following conditions:
an angular speed of the imaging device rotating around the first axis is greater than or equal to a first angular speed threshold;
an angular acceleration of the imaging device rotating around the first axis is greater than or equal to a first angular acceleration threshold;
a number of changes in a rotation direction of the imaging device around the first axis within a first preset time is greater than or equal to a number threshold; or
a rotation angle of the imaging device around the first axis within a second preset time is greater than or equal to a first angle threshold.

8. The method for controlling an imaging device according to claim 6, **characterized in that** the recording-start rotation condition comprises:
the imaging device rotates, around the first axis, clockwise by a first rotation angle and counterclockwise by a second rotation angle within a third preset time; and
an absolute value of a difference between the second rotation angle and the first rotation angle is less than 20 degrees; and/or
the first rotation angle is greater than or equal to 20 degrees and less than or equal to 110 degrees; and/or
the second rotation angle is greater than or equal to 20 degrees and less than or equal to 110 degrees.

9. The method for controlling an imaging device according to claim 6, **characterized in that** the recording-start rotation condition comprises:
the rotation information of the imaging device around the first axis meets a first sub-condition for starting rotation recording, and after a fourth preset time interval, the rotation information of the imaging device around the first axis meets a second sub-condition for starting rotation recording.

10. The method for controlling an imaging device according to claim 7, **characterized in that** the rotation information further comprises rotation information of the imaging device around a second axis, and the first axis forms an angle with the second axis, and the recording-start rotation condition comprises at least one of the following conditions:
an angular speed of the imaging device rotating around the second axis is less than or equal to a second angular speed threshold, and the second angular speed threshold is less than the first angular speed threshold;
an angular acceleration of the imaging device rotating around the second axis is less than or equal to a second angular acceleration threshold, and the second angular acceleration threshold is less than the first angular acceleration threshold; or
a rotation angle of the imaging device around the second axis within the second preset time is less than or equal to a second angle threshold, and the second angle threshold is less than the first angle threshold.

11. The method for controlling an imaging device according to claim 10, **characterized in that** the rotation information further comprises rotation information of the imaging device around a third axis, and the first axis, the second axis, and the third axis are perpendicular to each other in pairs, and the recording-start rotation condition further comprises at least one of the following conditions:
an angular speed of the imaging device rotating around the third axis is less than or equal to a third angular speed threshold, and the third angular speed threshold is less than the first angular speed threshold;
an angular acceleration of the imaging device rotating around the third axis is less than or equal to a third angular acceleration threshold, and the third angular acceleration threshold is less than the first angular acceleration threshold; or
a rotation angle of the imaging device around the third axis within the second preset time is less than or equal to a third angle threshold, and the third angle threshold is less than the first angle threshold.

12. The method for controlling an imaging device according to claim 1, **characterized in that** the pose information comprises a displacement parameter of the imaging device along a fourth axis, the fourth axis is perpendicular to an optical axis of a lens included in the imaging device, and the recording-start pose condition comprises that the displacement parameter is greater than a corresponding displacement parameter threshold.

13. The method for controlling an imaging device according to claim 1, **characterized in that** the imaging device is connected to an extension member, and the pose information meeting the recording-start pose condition comprises:
a detection signal representing a user action for initiating video recording at the imaging device via the extension member.

14. The method for controlling an imaging device according to claim 1, **characterized in that** the method further comprises:
determining the pose information of the imaging device based on motion data collected by a motion sensor of the imaging device; or
determining the pose information of the imaging device based on an image captured by the imaging device.

15. The method for controlling an imaging device according to claim 1, **characterized in that** initiating video recording in response to detecting that the pose information of the imaging device meets the recording-start pose condition comprises:
when the imaging device is in a standby or power-off state, switching the imaging device to a power-on state and initiating video recording in response to detecting that the pose information of the imaging device meets the recording-start pose condition.

16. A method for controlling an imaging device, applied to an imaging device, **characterized in that** the imaging device comprises a video recording function, and the method comprises:
initiating video recording in response to detecting a recording trigger operation on the imaging device;
performing video processing on a to-be-processed video segment to obtain a target video, wherein the to-be-processed video segment is a video segment that is within a recorded video recorded after the video recording is started and that satisfies a preset video processing condition; and
saving the target video.

17. The method for controlling an imaging device according to claim 16, **characterized in that** the recording trigger operation comprises:
an operation of making pose information of the imaging device meet the recording-start pose condition according to any one of claims 1 to 15.

18. The method for controlling an imaging device according to claim 16, **characterized in that** the video processing comprises at least one of the following:
deleting the to-be-processed video segment from the recorded video;
marking the to-be-processed video segment; or
replacing the to-be-processed video segment with a pre-stored video segment.

19. The method for controlling an imaging device according to any one of claims 16 to 18, **characterized in that** the preset video processing condition comprises that the pose information of the imaging device meets a video processing pose condition.

20. The method for controlling an imaging device according to claim 19, **characterized in that** the pose information comprises rotation information of the imaging device around a fifth axis within a fifth preset time after the video recording is started, the fifth axis forms an angle with an optical axis of a lens of the imaging device, and the video processing pose condition comprises at least one of the following conditions:
an angular speed of the imaging device rotating around the fifth axis is greater than or equal to a fourth angular speed threshold;
an angular acceleration of the imaging device rotating around the fifth axis is greater than or equal to a fourth angular acceleration threshold;
a number of changes in a rotation direction of the imaging device around the fifth axis is greater than or equal to a second number threshold; or
a rotation angle of the imaging device around the fifth axis is greater than or equal to a fourth angle threshold,
wherein the to-be-processed video segment comprises a video segment captured within the fifth preset time after the video recording is started, during which the imaging device satisfies the video processing pose condition.

21. The method for controlling an imaging device according to claim 19, **characterized in that** the video processing pose condition comprises that a movement speed of the imaging device is less than a speed threshold after the video recording is started; and
wherein the to-be-processed video segment comprises a video segment corresponding to a period during which the movement speed is less than the speed threshold after the video recording is started.

22. The method for controlling an imaging device according to claim 19, **characterized in that** the imaging device is coupled to an extension member, and the video processing pose condition comprises:
within a sixth preset time after the video recording is started, a pose change of the imaging device indicates that a user is performing a first preset operation, and the first preset operation comprises changing a length of the extension member coupled to the imaging device; and
wherein the to-be-processed video segment comprises a video segment corresponding to a period during which the user performs the first preset operation within a preset time after the video recording is started.

23. The method for controlling an imaging device according to claim 1 or 16, **characterized in that** the video recording comprises audio recording, and after the video recording is started, the method further comprises:
performing a preset function corresponding to a second preset operation in response to detecting an execution of the second preset operation by a user on the imaging device; and
processing an audio segment and a video segment recorded during the execution of the second preset operation by the user to obtain a target audio segment and a target video segment.

24. The method for controlling an imaging device according to claim 23, **characterized in that** the preset function comprises at least one of the following functions:
pausing video recording;
ending video recording;
starting voice control;
ending voice control;
marking a video; or
marking time.

25. The method for controlling an imaging device according to claim 23, **characterized in that** the second preset operation comprises rotating the imaging device and/or issuing a voice command.

26. The method for controlling an imaging device according to claim 24, **characterized in that** if the second preset operation comprises rotating the imaging device, different rotation methods and/or rotation actions correspond to different preset functions.

27. The method for controlling an imaging device according to claim 23, **characterized in that** processing the audio segment and the video segment recorded during the execution of the second preset operation by the user to obtain the target audio segment and the target video segment comprises:
determining a first start time and a first end time corresponding to the execution of the second preset operation by the user; and
trimming the audio segment and the video segment recorded from the first start time to the first end time to obtain the target audio segment and the target video segment.

28. The method for controlling an imaging device according to claim 27, **characterized in that** trimming the audio segment and the video segment recorded from the first start time to the first end time to obtain the target audio segment and the target video segment comprises:
trimming, respectively, the audio and the video recorded from the first start time to the first end time to obtain a first trimmed audio and a first trimmed video;
performing timestamp alignment on the first trimmed audio and the first trimmed video; and
generating the target audio segment and the target video segment based on the first trimmed audio and the first trimmed video that are timestamp-aligned with one another.

29. The method for controlling an imaging device according to claim 23, **characterized in that** the second preset operation comprises issuing a voice command, and processing the audio segment and the video segment recorded during the execution of the second preset operation by the user comprises:
muting the audio segment recorded during the execution of the second preset operation.

30. The method for controlling an imaging device according to claim 29, **characterized in that** muting the audio segment recorded during the execution of the second preset operation comprises:
replacing the audio segment recorded during the execution of the second preset operation with a muted audio segment to obtain the target audio segment.

31. The method for controlling an imaging device according to claim 29, **characterized in that** initiating video recording comprises initiating video pre-recording; and
wherein performing the preset function corresponding to the second preset operation in response to detecting the execution of the second preset operation by the user on the imaging device comprises initiating formal video recording in response to detecting a voice command issued by the user to start formal recording.

32. An imaging device, **characterized in that** the imaging device comprises:
a housing;
an imaging assembly disposed in the housing and configured to capture an image; and
one or more processors coupled to the imaging assembly, the one or more processors being configured to initiate video recording in response to detecting that pose information of the imaging device meets a recording-start pose condition.

33. The imaging device according to claim 32, **characterized in that** the imaging device further comprises a touch display screen connected to the processor, wherein before initiating video recording in response to detecting that the pose information of the imaging device meets the recording-state pose condition, the processor is further configured to:
control the touch display screen to display a target function control;
control the imaging device to be in a target function on-state in response to a function enable operation by a user performed on the target function control, wherein the target function is configured to initiate video recording in response to detecting that the pose information of the imaging device meets the recording-start pose condition.

34. The imaging device according to claim 33, **characterized in that** the imaging device further comprises an indicating device connected to the processor, wherein the processor is further configured to:
when the imaging device initiates video recording, control the indicating device to indicate that the imaging device has entered a video recording state.

35. The imaging device according to claim 34, **characterized in that** the indicating device comprises a speaker configured to broadcast voice indication information when the imaging device initiates the video recording, and the voice indication information is configured to indicate that the imaging device has entered the video recording state, and the processor is further configured to:
process audio recorded during broadcasting the voice indication information to obtain target audio with the voice indication information removed; and
save the target audio and a corresponding recorded video segment.

36. The imaging device according to any one of claims 32 to 35, **characterized in that** the pose information comprises rotation information of the imaging device, and initiating video recording in response to detecting that the pose information of the imaging device meets the recording-start pose condition comprises:
initiating video recording in response to detecting that the rotation information meets a recording-start rotation condition.

37. The imaging device according to claim 36, **characterized in that** the rotation information comprises rotation information of the imaging device around a first axis; and
wherein the first axis forms an angle with an optical axis of a lens of the imaging device; and/or the first axis passes through the housing of the imaging device.

38. The imaging device according to claim 37, **characterized in that** the recording-start rotation condition comprises at least one of the following conditions:
an angular speed of the imaging device rotating around the first axis is greater than or equal to a first angular speed threshold;
an angular acceleration of the imaging device rotating around the first axis is greater than or equal to a first angular acceleration threshold;
a number of changes in a rotation direction of the imaging device around the first axis within a first preset time is greater than or equal to a number threshold; or
a rotation angle of the imaging device around the first axis within a second preset time is greater than or equal to a first angle threshold.

39. The imaging device according to claim 37, **characterized in that** the recording-start rotation condition comprises:
the imaging device rotates, around the first axis, clockwise by a first rotation angle and counterclockwise by a second rotation angle within a third preset time; and
an absolute value of a difference between the second rotation angle and the first rotation angle is less than 20 degrees; and/or
the first rotation angle is greater than or equal to 20 degrees and less than or equal to 110 degrees; and/or
the second rotation angle is greater than or equal to 20 degrees and less than or equal to 110 degrees.

40. The imaging device according to claim 37, **characterized in that** the recording-start rotation condition comprises:
the rotation information of the imaging device around the first axis meets a first sub-condition for starting rotation recording, and after a fourth preset time interval, the rotation information of the imaging device around the first axis meets a second sub-condition for starting rotation recording.

41. The imaging device according to claim 38, **characterized in that** the rotation information further comprises rotation information of the imaging device around a second axis, and the first axis forms an angle with the second axis, and the recording-start rotation condition comprises at least one of the following conditions:
an angular speed of the imaging device rotating around the second axis is less than or equal to a second angular speed threshold, and the second angular speed threshold is less than the first angular speed threshold;
an angular acceleration of the imaging device rotating around the second axis is less than or equal to a second angular acceleration threshold, and the second angular acceleration threshold is less than the first angular acceleration threshold; or
a rotation angle of the imaging device around the second axis within the second preset time is less than or equal to a second angle threshold, and the second angle threshold is less than the first angle threshold.

42. The imaging device according to claim 41, **characterized in that** the rotation information further comprises rotation information of the imaging device around a third axis, and the first axis, the second axis, and the third axis are perpendicular to each other in pairs, and the recording-start rotation condition further comprises at least one of the following conditions:
an angular speed of the imaging device rotating around the third axis is less than or equal to a third angular speed threshold, and the third angular speed threshold is less than the first angular speed threshold;
an angular acceleration of the imaging device rotating around the third axis is less than or equal to a third angular acceleration threshold, and the third angular acceleration threshold is less than the first angular acceleration threshold; or
a rotation angle of the imaging device around the third axis within the second preset time is less than or equal to a third angle threshold, and the third angle threshold is less than the first angle threshold.

43. The imaging device according to claim 32, **characterized in that** the pose information comprises a displacement parameter of the imaging device along a fourth axis, the fourth axis is perpendicular to an optical axis of a lens included in the imaging device, and the recording-start pose condition comprises that the displacement parameter is greater than a corresponding displacement parameter threshold.

44. The imaging device according to claim 32, **characterized in that** the imaging device comprises a mounting portion configured to connect to an extension member, and the pose information meeting the recording-start pose condition comprises:
a detection signal representing a user action for initiating video recording at the imaging device via the extension member.

45. The imaging device according to claim 32, **characterized in that** the imaging device further comprises:
a motion sensor disposed within the housing and configured to collect motion data of the imaging device, wherein the processor is further configured to:
determine the pose information of the imaging device based on the motion data collected by the motion sensor of the imaging device.

46. The imaging device according to claim 32, **characterized in that** the processor is further configured to determine the pose information of the imaging device based on the image captured by the imaging assembly.

47. The imaging device according to claim 32, **characterized in that** the processor is configured to:
when the imaging device is in a standby or power-off state, switch the imaging device to a power-on state and initiate video recording in response to detecting that the pose information of the imaging device meets the recording-start pose condition.

48. An imaging device, **characterized in that** the imaging device comprises a video recording function, and the imaging device comprises:
a housing;
an imaging assembly disposed in the housing and configured to capture an image; and
one or more processors disposed within the housing and coupled to the imaging assembly, the one or more processors being configured to:
initiate video recording in response to detecting a recording trigger operation on the imaging device;
perform video processing on a to-be-processed video segment to obtain a target video, wherein the to-be-processed video segment is a video segment that is within a recorded video recorded after the video recording is started and that satisfies a preset video processing condition; and
save the target video.

49. The imaging device according to claim 48, **characterized in that** the imaging device is the imaging device according to any one of claims 32 to 47.

50. The imaging device according to claim 48, **characterized in that** the processor is configured to:
the video processing comprises at least one of the following:
deleting the to-be-processed video segment from the recorded video;
marking the to-be-processed video segment; or
replacing the to-be-processed video segment with a pre-stored video segment.

51. The imaging device according to any one of claims 48 to 50, **characterized in that** the preset video processing condition comprises that the pose information of the imaging device meets a video processing pose condition.

52. The imaging device according to claim 51, **characterized in that** the pose information comprises rotation information of the imaging device around a fifth axis within a fifth preset time after the video recording is started, the fifth axis forms an angle with an optical axis of a lens of the imaging device, and the video processing pose condition comprises at least one of the following conditions:
an angular speed of the imaging device rotating around the fifth axis is greater than or equal to a fourth angular speed threshold;
an angular acceleration of the imaging device rotating around the fifth axis is greater than or equal to a fourth angular acceleration threshold;
a number of changes in a rotation direction of the imaging device around the fifth axis is greater than or equal to a second number threshold; or
a rotation angle of the imaging device around the fifth axis is greater than or equal to a fourth angle threshold,
wherein the to-be-processed video segment comprises a video segment captured within the fifth preset time after the video recording is started, during which the imaging device satisfies the video processing pose condition.

53. The imaging device according to claim 51, **characterized in that** the video processing pose condition comprises that a movement speed of the imaging device is less than a speed threshold after the video recording is started; and
wherein the to-be-processed video segment comprises a video segment corresponding to a period during which the movement speed is less than the speed threshold after the video recording is started.

54. The imaging device according to claim 51, **characterized in that** the imaging device is provided with a mounting portion, and the mounting portion is configured to couple to an extension member;
wherein the video processing pose condition comprises:
within a sixth preset time after the video recording is started, a pose change of the imaging device indicates that a user is performing a first preset operation, and the first preset operation comprises changing a length of the extension member coupled to the imaging device; and
wherein the to-be-processed video segment comprises a video segment corresponding to a period during which the user performs the first preset operation within a preset time after the video recording is started.

55. The imaging device according to claim 32 or 48, **characterized in that** the video recording comprises audio recording, and after the video recording is initiated, the processor is further configured to:
perform a preset function corresponding to a second preset operation in response to detecting an execution of the second preset operation by a user on the imaging device, and
process an audio segment and a video segment recorded during the execution of the second preset operation by the user to obtain a target audio segment and a target video segment.

56. The imaging device according to claim 55, **characterized in that** the preset function comprises at least one of the following functions:
pausing video recording;
ending video recording;
starting voice control;
ending voice control;
marking a video; or
marking time.

57. The imaging device according to claim 55, **characterized in that** the second preset operation comprises rotating the imaging device and/or issuing a voice command.

58. The imaging device according to claim 56, **characterized in that** if the second preset operation comprises rotating the imaging device, different rotation methods and/or rotation actions correspond to different preset functions.

59. The imaging device according to claim 55, **characterized in that** processing the audio segment and the video segment recorded during the execution of the second preset operation by the user to obtain the target audio segment and the target video segment comprises:
determining a first start time and a first end time corresponding to the execution of the second preset operation by the user; and
trimming the audio segment and the video segment recorded from the first start time to the first end time to obtain the target audio segment and the target video segment.

60. The imaging device according to claim 59, **characterized in that** trimming the audio segment and the video segment recorded from the first start time to the first end time to obtain the target audio segment and the target video segment comprises:
trimming, respectively, the audio and the video recorded from the first start time to the first end time to obtain a first trimmed audio and a first trimmed video;
performing timestamp alignment on the first trimmed audio and the first trimmed video; and
generating the target audio segment and the target video segment based on the first trimmed audio and the first trimmed video that are timestamp-aligned with one another.

61. The imaging device according to claim 52, **characterized in that** the second preset operation comprises issuing a voice command, and processing the audio segment and the video segment recorded during the execution of the second preset operation by the user comprises:
muting the audio segment recorded during the execution of the second preset operation.

62. The imaging device according to claim 61, **characterized in that** muting the audio segment recorded during the execution of the second preset operation comprises:
replacing the audio segment recorded during the execution of the second preset operation with a muted audio segment to obtain the target audio segment.

63. The imaging device according to claim 61, **characterized in that** initiating video recording comprises initiating video pre-recording; and
wherein performing the preset function corresponding to the second preset operation in response to detecting the execution of the second preset operation by the user on the imaging device comprises initiating formal video recording in response to detecting a voice command issued by the user to start formal recording.
